# FASCICULE DE BREVET EUROPEEN

(11) **EP 4 252 127 B1**
(45) Date de publication et mention de la délivrance du brevet: **03.06.2026**
(21) Numéro de dépôt: 21810053.5
(22) Date de dépôt: 23.11.2021
(51) Int. Cl.: G06F 21/32

(54) **PROCÉDÉ ET DISPOSITIF DE GÉNÉRATION DE DONNÉES ASSOCIÉES À UN SIGNAL NUMÉRIQUE**
VERFAHREN UND VORRICHTUNG ZUR ERZEUGUNG VON DATEN IN ZUSAMMENHANG MIT EINEM DIGITALEN SIGNAL
METHOD AND DEVICE FOR GENERATING DATA ASSOCIATED WITH A DIGITAL SIGNAL

(30) Priorité: 25.11.2020 FR 2012134
(43) Date de publication de la demande: 04.10.2023
(73) Titulaire: Idakto, 75016 Paris (FR)
(72) Inventeur: CAUCHIE, Stéphane, 49240 Avrillé (FR); COSSARD, David, 49460 Montreuil-Juigné (FR); LEU, Maxime, 49000 Angers (FR)
(74) Mandataire: Edson, Russell Gregory
(86) Numéro de dépôt international: PCT/EP2021/082715
(87) Numéro de publication internationale: WO 2022/112265

(56) Documents cités:
- FR-A1- 2 954 549
- US-A1- 2020 104 472

## Description

L'invention concerne un procédé et un dispositif de génération de données associées à un signal numérique d'une caractéristique personnelle d'un individu, par exemple une caractéristique biométrique, selon les revendications indépendantes 1 et 13.

L'authentification d'un individu, autrement dit la vérification de l'identité de l'individu, peut être réalisée en utilisant différents facteurs d'authentification. Ces facteurs d'authentification sont des caractéristiques personnelles de l'individu. Une caractéristique personnelle d'un individu peut comprendre la connaissance d'une information telle qu'un mot de passe, la détention d'un objet tel qu'un téléphone mobile, et/ou une caractéristique propre à l'individu. Une caractéristique propre à un individu est, par exemple, une caractéristique biométrique issue de la mesure et de l'analyse d'une caractéristique physiologique ou comportementale de l'individu. Les principales formes de biométrie physiologique sont l'empreinte digitale, l'ADN, le visage, le réseau veineux, l'iris et la forme des oreilles. Les principales formes de biométrie comportementale sont la voix, la démarche et la gestuelle.

Les caractéristiques personnelles d'un individu sont représentées sous la forme d'un signal numérique, c'est-à-dire d'une chaine d'éléments binaires.

L'utilisation de la biométrie est de plus en plus fréquente pour déterminer l'identité d'une personne. En effet, les caractéristiques biométriques d'un individu sont universelles, uniques pour chaque individu, permanentes, immuables et mesurables. En outre, la biométrie permet de prouver l'identité d'un individu sans avoir à se souvenir de codes d'accès, de mots de passe et d'identifiants. En effet, lorsqu'une caractéristique biométrique est utilisée, l'information biométrique est transformée en un signal numérique puis le signal numérique est croisé avec des données sécurisées préalablement mémorisées. Une fois que l'authentification est réalisée avec succès, les accès correspondant sont donnés.

Malheureusement, avec le développement des technologies de falsification, ces caractéristiques biométriques peuvent être falsifiées, en particulier le signal numérique des caractéristiques biométriques peut être volé, d'où la nécessité de rechercher des techniques complémentaires assurant une meilleure sécurité pour l'authentification.

Afin d'augmenter la sécurité de l'authentification, les systèmes d'authentification utilisant la biométrie peuvent être mis en œuvre dans un environnement sécurisé tel qu'une enclave sécurisée. Un tel environnement permet de stocker les données représentatives d'une ou plusieurs caractéristiques personnelles et de réaliser les correspondances entre ces données permettant d'authentifier un individu.

La mise en œuvre d'une telle authentification dans un environnement sécurisé présente l'avantage de la sécurité de l'authentification, toutefois, il n'est pas possible d'ajouter un nouveau système d'authentification basé par exemple sur de la biométrie sans avoir les droits d'accès à l'environnement sécurisé.

Ainsi, ces différentes solutions ne présentent pas un niveau suffisant de sécurité pour la réalisation de l'authentification ou les mécanismes existants ne permettent pas de faire évoluer les mécanismes d'authentification.

FR2954549 concerne les données biométriques, et leur représentation en vue d'une utilisation applicative ultérieure.

US2020/104472 Al concerne l'enregistrement d'un modèle biométrique généré à partir d'acquisition d'un ou plusieurs échantillons biométriques d'un individu, convertis en une représentation binaire.

Le but de l'invention est de remédier aux inconvénients des techniques antérieures.

Un autre but est de réaliser un codage simple, reproductible et efficace du signal numérique, ce codage du signal numérique évitant l'utilisation ultérieure du signal numérique de sorte à maintenir la confidentialité du signal numérique.

Un autre but de l'invention est de permettre la génération d'informations d'authentification dépendant du signal numérique d'une caractéristique personnelle de l'individu sans toutefois comprendre le signal numérique de la caractéristique personnelle de l'individu empêchant les personnes non autorisées à effectuer un contrôle d'identité et renforçant ainsi la sécurité des informations d'authentification.

Un autre but de l'invention est de permettre un contrôle d'identité à partir d'une caractéristique personnelle de l'individu et d'informations d'authentification préalablement mémorisées, ledit contrôle d'identité ne pouvant être réalisé que par des personnes autorisées.

L'invention propose ainsi selon un premier aspect de permettre de générer des données associées à un signal numérique tel qu'un signal numérique d'une caractéristique personnelle d'un individu et en particulier d'un signal numérique d'une caractéristique biométrique d'un individu. Selon un second aspect qui ne fait pas partie de la présente invention, il est proposé de générer des informations d'authentification associées à un individu et de contrôler l'identité d'un individu.

Selon le premier aspect, l'invention a pour objet un procédé de génération de données associées à un signal numérique d'une caractéristique personnelle d'un individu, et en particulier un signal numérique d'une caractéristique biométrique d'un individu, au moyen d'un premier ensemble de signaux numériques et d'un deuxième ensemble de signaux numériques, les signaux numériques du premier ensemble et du deuxième ensemble comprenant chacun un signal numérique d'une caractéristique personnelle d'individu, le procédé étant mis en oeuvre dans un dispositif électronique comprenant un dispositif de capture permettant l'obtention d'un signal numérique. Le procédé comprend :
- l'obtention du signal numérique d'une caractéristique personnelle de l'individu au moyen du dispositif de capture ;
- la génération d'un vecteur binaire V[1...n] de longueur n au moyen des étapes suivantes :
   a. une étape de sélection d'un signal numérique du premier ensemble de signaux numériques ;
   b. une étape de sélection d'un signal numérique du deuxième ensemble de signaux numériques ;
   c. une étape de détermination du signal numérique le plus proche du signal numérique obtenu entre le signal numérique sélectionné du premier ensemble et le signal numérique sélectionné du deuxième ensemble ;
   d. une étape d'insertion d'un élément binaire à 1 dans le vecteur binaire V[i] si le signal numérique sélectionné du premier ensemble est plus proche du signal numérique obtenu et d'un élément binaire à 0 dans le cas contraire ;
- la réitération des étapes a. à d. pour une pluralité n de signaux numériques du premier ensemble et pour une pluralité n de signaux numériques du deuxième ensemble, l'élément binaire à 1 ou 0 étant inséré à une i^{ème} position respective correspondante du vecteur binaire, avec i = 1 ... n ;
- la délivrance du vecteur binaire V en tant que données associées au signal numérique obtenu.

Le signal numérique obtenu et les signaux numériques du premier ensemble et du deuxième ensemble peuvent être générés par extraction des caractéristiques d'un signal numérique brut.

Le signal numérique obtenu et les signaux numériques du premier ensemble et du deuxième ensemble peuvent comprendre chacun un signal numérique d'une caractéristique biométrique.

Le signal numérique d'une caractéristique biométrique peut dans ce cas représenter une image d'un individu.

L'image d'un individu peut alors représenter une image photographique d'individu.

Le signal numérique d'une caractéristique biométrique peut représenter un ensemble de points d'intérêt extraits d'une image d'un individu.

Le signal numérique d'une caractéristique biométrique peut également représenter une image auditive d'un individu.

L'étape d'obtention du signal numérique peut comprendre la réalisation d'une mesure biométrique.

L'étape c. de détermination du signal numérique le plus proche du signal numérique obtenu entre le signal numérique sélectionné du premier ensemble et le signal numérique sélectionné du deuxième ensemble peut comprendre :
- un calcul d'une première distance entre le signal numérique obtenu et le signal numérique sélectionné du premier ensemble ;
- un calcul d'une deuxième distance entre le signal numérique obtenu et le signal numérique sélectionné du deuxième ensemble ;
- une étape de comparaison de la première distance avec la deuxième distance afin de déterminer la distance la plus petite,
   - si la première distance est la distance la plus petite alors le signal numérique sélectionné du premier ensemble est plus proche du signal numérique obtenu et
   - dans le cas contraire, le signal numérique sélectionné du deuxième ensemble est plus proche du signal numérique obtenu.

Dans ce cas, la première distance entre le signal numérique obtenu et le signal numérique sélectionné du premier ensemble et la deuxième distance entre le signal numérique obtenu et le signal numérique sélectionné du deuxième ensemble peuvent alors être des distances euclidiennes.

Chaque signal numérique du premier ensemble et du deuxième ensemble peut en outre, être défini par sa position dans l'ensemble, et le signal numérique sélectionné dans le premier ensemble et le signal numérique sélectionné dans le deuxième ensemble ont alors la même position dans le premier et le deuxième ensemble respectivement.

L'invention a également pour objet un dispositif configuré pour mettre en œuvre le procédé précédemment décrit.

On va maintenant décrire des exemples de réalisation de la présente invention en référence aux figures annexées où les mêmes références désignent d'une figure à l'autre des éléments identiques ou fonctionnellement semblables :
[fig.1] illustre un mode de réalisation particulier d'un dispositif électronique configuré pour mettre en œuvre le procédé de génération de données associées à un signal numérique conformément au premier aspect de l'invention.
[fig.2] illustre un exemple de mode de réalisation du procédé de génération de données associées à un signal numérique conformément au premier aspect de l'invention, mis en œuvre dans un dispositif électronique.
[fig.3] illustre un exemple de mode de réalisation du procédé de génération de données associées à un signal numérique dans le cas particulier d'un signal numérique d'une caractéristique personnelle d'un individu, à savoir une caractéristique biométrique, mis en œuvre dans un dispositif électronique.
[fig.4] illustre un mode de réalisation particulier d'un dispositif électronique configuré pour mettre en œuvre le procédé de génération d'informations d'authentification associées à un individu et le procédé de contrôle d'identité associé conformément au second aspect de l'invention.
[fig.5] illustre un autre mode de réalisation particulier du dispositif électronique configuré pour mettre en œuvre le procédé de génération d'informations d'authentification associées à un individu et le procédé de contrôle d'identité associé conformément au second aspect de l'invention.
[fig.6] illustre un mode de réalisation du procédé de génération d'informations d'authentification associées à un individu conformément au second aspect de l'invention.
[fig.7] illustre une première variante de réalisation du procédé de génération d'informations d'authentification associées à un individu conformément au second aspect de l'invention.
[fig.8] illustre une deuxième variante de réalisation du procédé de génération d'informations d'authentification associées à un individu conformément au second aspect de l'invention.
[fig.9] illustre une troisième variante de réalisation du procédé de génération d'informations d'authentification associées à un individu conformément au second aspect de l'invention.
[fig.10] illustre une quatrième variante de réalisation du procédé de génération d'informations d'authentification associées à un individu conformément au second aspect de l'invention.
[fig.11] illustre un mode de réalisation du procédé de contrôle d'identité conformément au second aspect de l'invention.
[fig.12] illustre une première variante de réalisation du procédé de contrôle d'identité conformément au second aspect de l'invention.
[fig.13] illustre une deuxième variante de réalisation du procédé de contrôle d'identité conformément au second aspect de l'invention.
[fig.14] illustre une troisième variante de réalisation du procédé de contrôle d'identité conformément au second aspect de l'invention.
[fig.15] illustre une quatrième variante de réalisation du procédé de contrôle d'identité conformément au second aspect de l'invention.

La présente invention concerne, selon un premier aspect, la génération de données associées à un signal numérique afin d'être utilisées ultérieurement par exemple lors de la génération d'un certificat, lors de l'enrôlement d'un individu et/ou lors de l'authentification d'un individu. En particulier, l'invention concerne un procédé de génération de données associées à un signal numérique, au moyen d'un premier ensemble de signaux numériques et d'un deuxième ensemble de signaux numériques, mis en œuvre dans un dispositif électronique, tel qu'un téléphone mobile, un ordinateur ou une tablette.

Selon un deuxième aspect, qui ne fait pas partie de l'invention, il est décrit la génération d'informations d'authentification associées à un individu ayant un identifiant donné et le contrôle d'identité d'un individu. En particulier, l'invention concerne un procédé de génération d'informations d'authentification associées à un individu ayant un identifiant donné et un procédé de contrôle d'identité d'un individu ayant un identifiant donné à partir d'informations d'authentification préalablement mémorisées mis en œuvre au moins en partie, dans un dispositif électronique, tel qu'un téléphone mobile, un ordinateur ou une tablette.

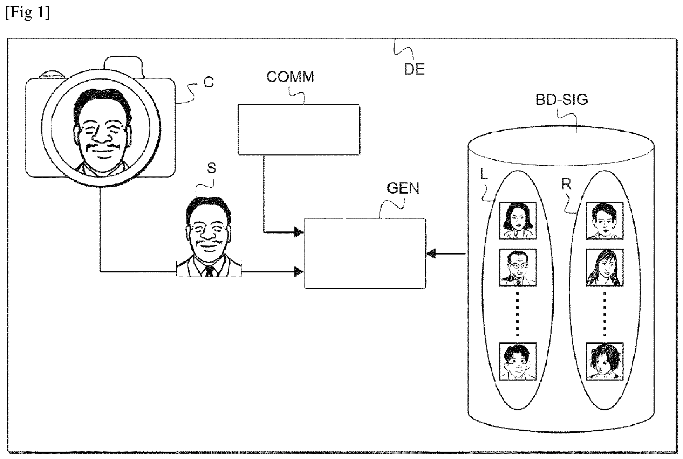

En référence à la Figure 1, il est décrit un mode de réalisation d'un dispositif électronique DE dans lequel est mis en œuvre le procédé de génération de données associées à un signal numérique.

Le dispositif électronique DE peut être tout type de dispositif, tel qu'un téléphone portable, une tablette, un ordinateur, etc., lequel comprend une plate-forme matérielle et logicielle sur laquelle s'exécutent des logiciels, ces logiciels étant soit directement exécutables soit interprétés sur une machine virtuelle.

Selon un mode de réalisation particulier, le dispositif électronique DE comprend une base de données BD-SIG mémorisant au moins un premier ensemble de signaux numériques L et un deuxième ensemble de signaux numériques R.

Selon un autre mode de réalisation, la base de données BD-SIG est mémorisée sur un serveur distant mémorisant une base de données d'ensembles de signaux numériques. Selon ce mode de réalisation, le dispositif électronique DE comprend des moyens de communication avec ce serveur distant afin d'accéder directement aux ensembles de signaux numériques ou indirectement au moyen de messages requérant et réceptionnant un premier ensemble de signaux numériques L et un deuxième ensemble de signaux numériques R.

Le premier ensemble de signaux numériques L et le deuxième ensemble de signaux numériques R comprennent une pluralité de signaux numériques.

Un signal numérique est une chaine d'éléments binaires au moyen de laquelle des informations sont représentées. Les informations représentées sont soit des données brutes soit des données après traitement.

Les données brutes correspondent par exemple à une caractéristique personnelle d'un individu, à savoir une caractéristique biométrique d'un individu (iris des yeux, empreintes digitales, image de portrait, caractéristiques vocales, image auditive, etc.) ou une caractéristique d'un dispositif (adresse MAC, etc.). Les données brutes peuvent aussi correspondre à tout autre information telle qu'une image d'un paysage, apte à être représentée par un signal numérique. Ainsi, un signal numérique représentant des données brutes, aussi appelé signal numérique brut, est à titre d'exemple, un signal numérique d'une caractéristique biométrique d'un individu telle qu'une image photographique d'individu. L'image d'individu peut être une image d'un individu réel ou non.

Les données après traitement correspondent par exemple à des données particulières extraites des données brutes, ou à des données obtenues après un filtrage des données brutes afin d'enlever le bruit, c'est-à-dire les informations non utiles. Les données après traitement sont par exemple les points d'intérêts d'une image. Ainsi, un signal numérique représentant des données après traitement, aussi appelé signal numérique traité, est un signal numérique généré par extraction des caractéristiques d'un signal numérique brut. A titre d'exemple, un signal numérique représentant des données après traitement, est un signal numérique représentant un ensemble de points d'intérêt d'une caractéristique biométrique d'un individu tel qu'une image d'individu ou une image photographique d'individu.

Le premier ensemble de signaux numériques L et le deuxième ensemble de signaux numériques R peuvent être créés à partir de signaux numériques (brut ou traités) issus de capture de caractéristiques réelles ou être générés aléatoirement ou non.

Le dispositif électronique DE comprend en outre, un dispositif de capture C permettant l'obtention d'un signal numérique S. Le dispositif de capture C est par exemple, une caméra, un appareil photographique, un enregistreur de son ou tout dispositif apte à mesurer et analyser des caractéristiques biométriques d'un individu et notamment des caractéristiques physiologiques ou comportementales de l'individu.

Selon un autre mode de réalisation, le dispositif électronique DE peut aussi comprendre des moyens de communication COMM afin d'obtenir d'un dispositif distant le signal numérique à traiter.

Le dispositif électronique DE comprend en outre, un générateur de données GEN, apte à générer des données à partir d'un signal numérique S obtenu conformément à l'invention.

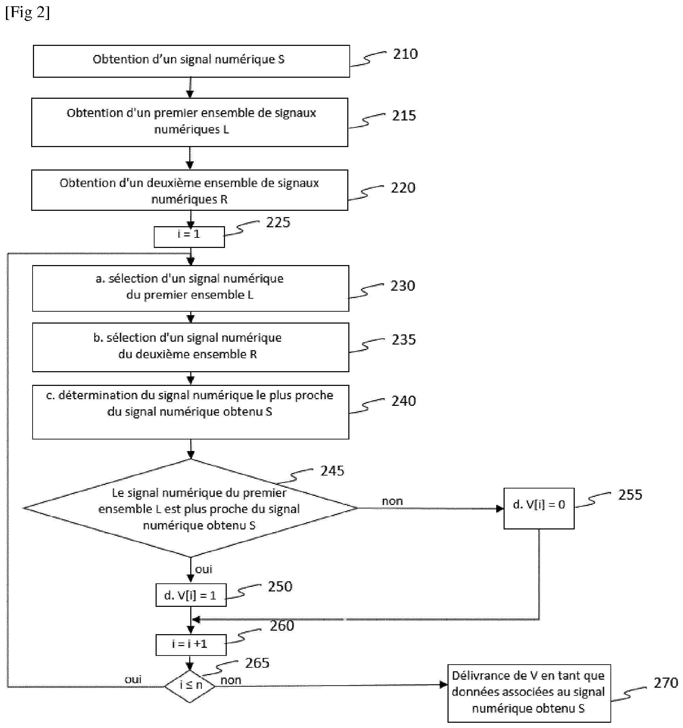

La Figure 2 illustre un mode de réalisation d'un procédé de génération de données associées à un signal numérique S, au moyen d'un premier ensemble de signaux numériques L et d'un deuxième ensemble de signaux numériques R conformément à l'invention. Les données associées à un signal numérique S seront générées sous forme d'un vecteur binaire de longueur n, aussi appelée chaîne binaire. La valeur n peut être inférieure ou égale au nombre de signaux numériques mémorisés dans le premier ensemble de signaux numériques L et au nombre de signaux numériques mémorisés dans le deuxième ensemble de signaux numériques R. Dans ce cas, la génération de données associées à un signal numérique S peut être réalisée soit à partir de l'ensemble des signaux du premier ensemble de signaux numériques L et du deuxième ensemble de signaux numériques R, soit à partir d'un sous ensemble de signaux du premier ensemble de signaux numériques L et d'un sous ensemble de signaux du deuxième ensemble de signaux numériques R.

Le procédé débute par l'obtention d'un signal numérique S (étape 210). Cette étape est réalisée par exemple au moyen du dispositif de capture C ou par la réception d'un signal numérique à traiter. L'étape 210 est suivie d'une étape d'obtention d'un premier ensemble de signaux numériques L (étape 215) et d'une étape d'obtention d'un deuxième ensemble de signaux numériques R (étape 220). Selon un premier mode de réalisation, les étapes 215 et 220 sont réalisées par l'extraction de ces deux ensembles de la base de données d'ensembles de signaux numériques BD-SIG. Selon un autre mode de réalisation, les étapes 215 et 220 sont réalisées via l'envoi de messages à un serveur distant requérant et réceptionnant un premier ensemble de signaux numériques L et un deuxième ensemble de signaux numériques R.

Selon un autre mode de réalisation, les étapes 215 et 220 peuvent être réalisées préalablement à l'étape 210.

Les étapes 210, 215 et 220 sont suivies d'une étape consistant à positionner un indicateur i à la valeur 1 (étape 225). Cet indicateur i représente la i^{ème} position dans le vecteur V et va prendre au cours du procédé, une valeur allant de 1 à n, n étant la longueur du vecteur binaire V. Cet indicateur i peut également être utilisé aux étapes 230 et 235 lors des étapes de sélection d'un signal numérique.

L'étape 225 est suivie d'une étape a. de sélection d'un signal numérique du premier ensemble de signaux numériques L (étape 230) et une étape b. de sélection d'un signal numérique du deuxième ensemble de signaux numériques R (étape 235).

Selon un mode de réalisation particulier des étapes 230 et 235, chaque signal numérique du premier ensemble L et du deuxième ensemble R est défini en outre par sa position dans l'ensemble, et le signal numérique sélectionné dans le premier ensemble L (étape 230) et le signal numérique sélectionné dans le deuxième ensemble R (étape 235) ont la même position dans le premier et le deuxième ensemble respectivement.

Par exemple, l'étape 230 et l'étape 235 consistent à identifier et sélectionner le signal numérique présent à la i^{ème} position respectivement dans le premier ensemble de signaux numériques L et dans le deuxième ensemble de signaux numériques R.

Les étapes 230 et 235 se poursuivent avec une étape c. de détermination du signal numérique le plus proche du signal numérique obtenu S entre le signal numérique sélectionné du premier ensemble L et le signal numérique sélectionné du deuxième ensemble R (étape 240).

Selon un mode de réalisation particulier, cette étape c. de détermination du signal numérique le plus proche comprend un calcul d'une première distance entre le signal numérique obtenu S et le signal numérique sélectionné du premier ensemble L, et un calcul d'une deuxième distance entre le signal numérique obtenu S et le signal numérique sélectionné du deuxième ensemble R. Le calcul de la première distance et de la deuxième distance est réalisé au moyen d'une fonction capable de déterminer une distance entre deux signaux numériques. Cette fonction est notamment prédéterminée avant l'exécution du procédé de génération de données associées à un signal numérique ou est obtenue au début de l'exécution dudit procédé de génération. Les distances calculées sont par exemple des distances euclidiennes ou des distances déterminées à partir d'un réseau de neurones.

A l'issue du calcul de la première distance et de la deuxième distance, il est procédé à une étape de comparaison de ces deux distances afin de déterminer la distance la plus petite. Si la première distance est la distance la plus petite alors le signal numérique sélectionné du premier ensemble L est plus proche du signal numérique obtenu S et, dans le cas contraire, le signal numérique sélectionné du deuxième ensemble R est plus proche du signal numérique obtenu S.

A l'issue de l'étape c. de détermination du signal numérique le plus proche du signal numérique obtenu S (étape 240), un test est réalisé lors d'une étape 245 afin de déterminer si le signal numérique du premier ensemble L est le signal le plus proche du signal numérique obtenu S.

Si tel est le cas, le procédé se poursuit par une étape d. d'insertion d'un élément binaire à 1 dans un vecteur binaire V[i] (étape 250). Dans le cas contraire, le procédé se poursuit par une étape d. d'insertion d'un élément binaire à 0 dans un vecteur binaire V[i] (étape 255).

Les étapes 250 et 255 se poursuivent par une étape 260 incrémentant l'indicateur i de 1. Cette étape est suivie d'une étape de test (étape 265) afin de déterminer si l'indicateur i est inférieur ou égal à la valeur n, n étant la longueur du vecteur binaire V. Si tel est le cas, le procédé se poursuit à l'étape 230 précédemment décrite. Ainsi, les étapes a. à d. sont réitérées n fois pour une pluralité n de signaux numériques du premier ensemble et une pluralité n de signaux numériques du deuxième ensemble. Ainsi, l'élément binaire à 1 ou 0 inséré à l'étape d. (étape 250 ou étape 255) est inséré à une i^{ème} position respective correspondante du vecteur binaire V, avec i = 1 ... n. Lorsque le test à l'étape 265 est négatif, c'est-à-dire que l'indicateur i est supérieur à la valeur n, alors le procédé délivre un vecteur binaire de longueur n en tant que données associées au signal numérique obtenu (étape 270).

A l'issue de ce procédé de génération, le signal numérique obtenu est codé sous la forme d'un vecteur binaire.

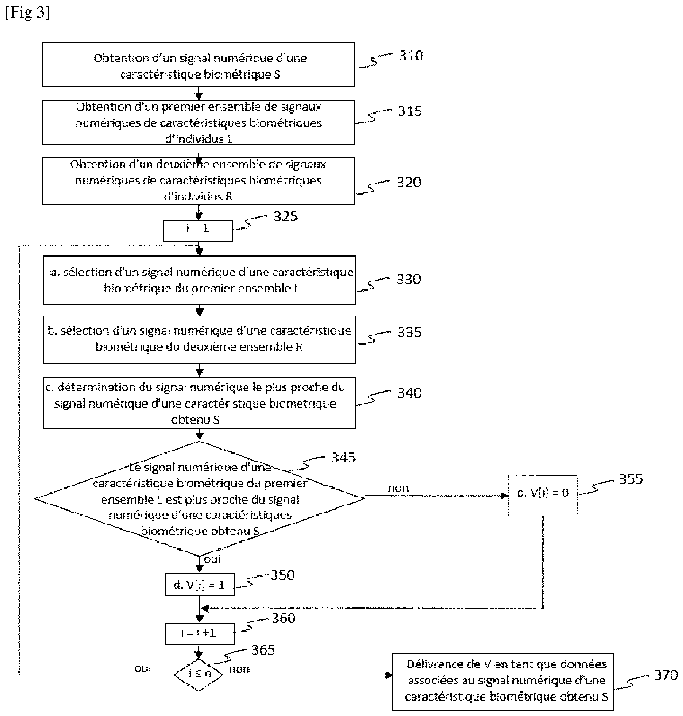

La Figure 3 illustre un mode de réalisation particulier du procédé décrit au support de la Figure 2, dans lequel les signaux numériques considérés sont des signaux numériques représentant une caractéristique personnelle d'individus, par exemple une caractéristique biométrique. Dans la suite de la description, un signal numérique représentant une caractéristique biométrique d'un individu est appelé signal numérique d'une caractéristique biométrique d'un individu. Ainsi, la Figure 3 illustre un procédé de génération de données associées à un signal numérique d'une caractéristique biométrique d'un individu S, au moyen d'un premier ensemble de signaux numériques de caractéristiques biométriques d'individus L et d'un deuxième ensemble de signaux numériques de caractéristiques biométriques d'individus R conformément à l'invention. Comme il a été vu précédemment, les données associées à un signal numérique S seront générées sous forme d'un vecteur binaire de longueur n. La valeur n peut être inférieure ou égale au nombre de signaux numériques mémorisés dans le premier ensemble de signaux numériques de caractéristiques biométriques d'individus L et au nombre de signaux numériques mémorisés dans le deuxième ensemble de signaux numériques de caractéristiques biométriques d'individus R. Dans ce cas, la génération de données associées à un signal numérique d'une caractéristique biométrique d'un individu S peut être réalisée soit à partir de l'ensemble des signaux du premier ensemble de signaux numériques de caractéristiques biométriques d'individus L et du deuxième ensemble de signaux numériques de caractéristiques biométriques d'individus R, soit à partir d'un sous ensemble de signaux du premier ensemble de signaux numériques de caractéristiques biométriques d'individus L et d'un sous ensemble de signaux du deuxième ensemble de signaux numériques de caractéristiques biométriques d'individus R.

Le procédé débute par l'obtention d'un signal numérique d'une caractéristique biométrique d'un individu S (étape 310). Cette étape est réalisée par exemple au moyen du dispositif de capture C ou par la réception d'un signal numérique à traiter ou par tout autre moyen de capture d'une caractéristique biométrique de l'individu. Le signal numérique d'une caractéristique biométrique S est par exemple réalisé à partir d'une mesure de la caractéristique biométrique de l'individu.

L'étape 310 est suivie d'une étape d'obtention d'un premier ensemble de signaux numériques de caractéristiques biométriques d'individus L (étape 315) et d'une étape d'obtention d'un deuxième ensemble de signaux numériques de caractéristiques biométriques d'individus R (étape 320). Selon un premier mode de réalisation, les étapes 315 et 320 sont réalisées par l'extraction de ces deux ensembles de la base de données d'ensembles de signaux numériques BD-SIG. Selon un autre mode de réalisation, les étapes 315 et 320 sont réalisées via l'envoi de messages à un serveur distant requérant et réceptionnant un premier ensemble de signaux numériques L et un deuxième ensemble de signaux numériques R.

Selon un autre mode de réalisation particulier, les étapes 315 et 320 sont réalisées préalablement à l'étape 310.

Les étapes 310, 315 et 320 sont suivies d'une étape consistant à positionner un indicateur i à la valeur 1 (étape 325). Cet indicateur i représente la i^{ème} position dans le vecteur V et va prendre au cours du procédé, une valeur allant de 1 à n, n étant la longueur du vecteur binaire V. Cet indicateur i peut également être utilisé aux étapes 230 et 235 lors des étapes de sélection d'un signal numérique.

L'étape 325 est suivie d'une étape a. de sélection d'un signal numérique du premier ensemble de signaux numériques de caractéristiques biométriques d'individus L (étape 330) et une étape b. de sélection d'un signal numérique du deuxième ensemble de signaux numériques de caractéristiques biométriques d'individus R (étape 335).

Selon un mode de réalisation particulier, chaque signal numérique du premier ensemble de signaux numériques de caractéristiques biométriques d'individus L et du deuxième ensemble de signaux numériques de caractéristiques biométriques d'individus R est défini en outre par sa position dans l'ensemble, et le signal numérique sélectionné dans le premier ensemble L (étape 330) et le signal numérique sélectionné dans le deuxième ensemble R (étape 335) ont la même position dans le premier et le deuxième ensemble respectivement.

Par exemple, l'étape 330 et l'étape 335 consistent à identifier et sélectionner le signal numérique présent à la i^{ème} position respectivement dans le premier ensemble de signaux numériques L et dans le deuxième ensemble de signaux numériques R.

Les étapes 330 et 335 se poursuivent avec une étape c. de détermination du signal numérique le plus proche du signal numérique d'une caractéristique biométrique obtenu S entre le signal numérique sélectionné du premier ensemble L et le signal numérique sélectionné du deuxième ensemble R (étape 340).

Selon un mode de réalisation particulier, cette étape c. de détermination du signal numérique le plus proche comprend un calcul d'une première distance entre le signal numérique d'une caractéristique biométrique obtenu S et le signal numérique d'une caractéristique biométrique sélectionné du premier ensemble L, et un calcul d'une deuxième distance entre le signal numérique d'une caractéristique biométrique obtenu S et le signal numérique d'une caractéristique biométrique sélectionné du deuxième ensemble R. Le calcul de la première distance et de la deuxième distance est réalisé au moyen d'une fonction capable de déterminer une distance entre deux signaux numériques. Cette fonction est notamment prédéterminée avant l'exécution du procédé de génération de données associées à un signal numérique ou est obtenue au début de l'exécution dudit procédé de génération. Les distances calculées sont par exemple des distances euclidiennes ou des distances déterminées à partir d'un réseau de neurones. A l'issue du calcul de la première distance et de la deuxième distance, il est procédé à une étape de comparaison de ces deux distances afin de déterminer la distance la plus petite. Si la première distance est la distance la plus petite alors le signal numérique d'une caractéristique biométrique sélectionné du premier ensemble L est plus proche du signal numérique d'une caractéristique biométrique obtenu S et, dans le cas contraire, le signal numérique d'une caractéristique biométrique sélectionné du deuxième ensemble R est plus proche du signal numérique d'une caractéristique biométrique obtenu S.

A l'issue de l'étape c. de détermination du signal numérique le plus proche du signal numérique d'une caractéristique biométrique obtenu S (étape 340), un test est réalisé lors d'une étape 345 afin de déterminer si le signal numérique d'une caractéristique biométrique sélectionné du premier ensemble L est le signal le plus proche du signal numérique d'une caractéristique biométrique obtenu S.

Si tel est le cas, le procédé se poursuit à une étape d. d'insertion d'un élément binaire à 1 dans un vecteur binaire V[i] (étape 350). Dans le cas contraire, le procédé se poursuit à une étape d. d'insertion d'un élément binaire à 0 dans un vecteur binaire V[i] (étape 355).

Les étapes 350 et 355 se poursuivent à une étape 360 incrémentant l'indicateur i de 1. Cette étape est suivie d'une étape de test (étape 365) afin de déterminer si l'indicateur i est inférieur ou égal à la valeur n. Si tel est le cas, le procédé se poursuit à l'étape 330 précédemment décrite. Ainsi, les étapes a. à d. sont réitérées n fois pour une pluralité n de signaux numériques du premier ensemble et une pluralité n de signaux numériques du deuxième ensemble. Ainsi, l'élément binaire à 1 ou 0 inséré à l'étape d. (étapes 350 ou 355) est inséré à une i^{ème} position respective correspondante du vecteur binaire, avec i = 1 ... n. Lorsque le test à l'étape 365 est négatif, c'est-à-dire que l'indicateur i est supérieur à la valeur n, alors le procédé délivre un vecteur binaire de longueur n en tant que données associées au signal numérique obtenu (étape 370).

Bien que le procédé de génération de données de la Figure 3 soit décrit au regard d'une caractéristique biométrique, ce procédé est également applicable à toute caractéristique personnelle d'un individu.

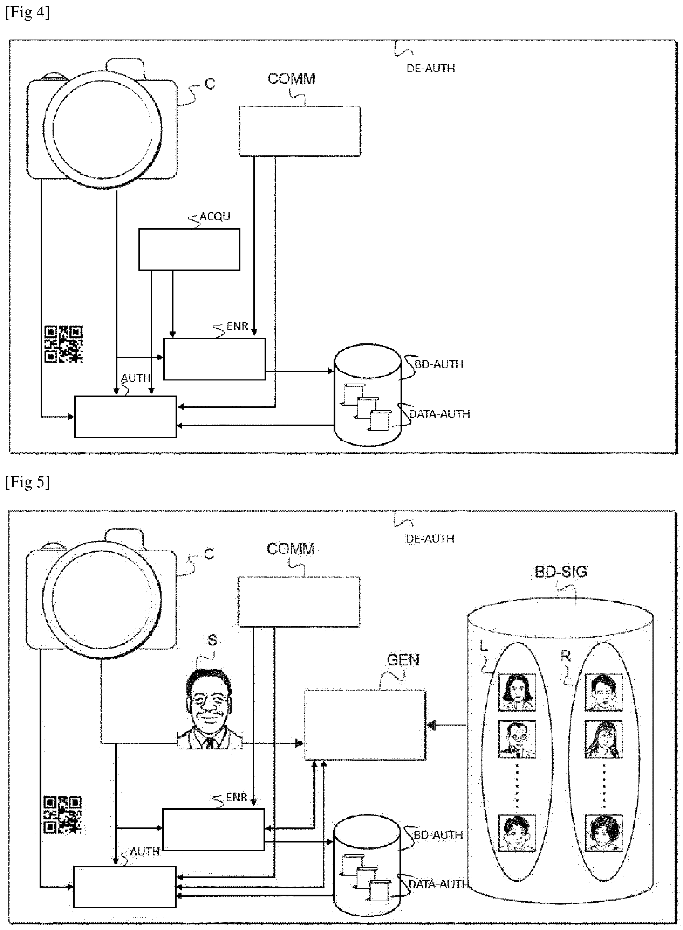

Les Figures 4 et 5 illustrent un premier et un second mode de réalisation de la structure d'un dispositif électronique DE-AUTH dans lequel sont mis en œuvre en tout ou partie le procédé de génération d'informations d'authentification associées à un individu et le procédé de contrôle d'identité d'un individu.

Le dispositif électronique DE-AUTH peut être tout type de dispositif, tel qu'un téléphone portable, une tablette, un ordinateur, etc., lequel comprend une plate-forme matérielle et logicielle sur laquelle s'exécutent des logiciels, ces logiciels étant soit directement exécutables soit interprétés sur une machine virtuelle.

Le dispositif électronique DE-AUTH comprend un dispositif d'enrôlement ENR c'est-à-dire d'enregistrement des informations d'authentification d'un individu. Le dispositif d'enrôlement ENR est en outre apte à mettre en œuvre le procédé de génération d'informations d'authentification DATA-AUTH associé à un individu conformément au second aspect de l'invention. Les informations d'authentification DATA-AUTH sont mémorisées, par exemple dans une mémoire ou dans une base de données BD-AUTH. La mémorisation des informations d'authentification DATA-AUTH peut être réalisée sur le dispositif électronique DE-AUTH ou dans un dispositif distant.

Le dispositif électronique DE-AUTH comprend en outre un dispositif d'authentification AUTH apte à mettre en œuvre tout ou partie du procédé de contrôle d'identité d'un individu ayant préalablement fait l'objet d'un enrôlement conformément au second aspect de l'invention.

Le dispositif électronique DE-AUTH peut comprendre un dispositif de capture C permettant l'obtention d'un signal numérique. Le dispositif de capture C est, par exemple, une caméra, un appareil photographique un enregistreur de son ou tout dispositif apte à mesurer et analyser des caractéristiques biométriques d'un individu et notamment des caractéristiques physiologiques ou comportementales d'un individu.

Le dispositif électronique DE-AUTH peut comprendre des moyens de communications COMM afin d'obtenir d'un dispositif distant un signal numérique à traiter. Le dispositif électronique DE-AUTH peut comprendre en outre, des moyens d'acquisition ACQU apte à permettre l'obtention de toute caractéristique personnelle de l'individu, à savoir une information connue de lui (mot de passe, etc) ou une caractéristique propre à l'objet qu'il détient et/ou une caractéristique propre à l'individu telle qu'une caractéristique biométrique.

Le dispositif électronique DE-AUTH illustré en Figure 5 est un mode de réalisation particulier du dispositif de la Figure 4, lequel comprend un générateur de données GEN apte à mettre en œuvre le procédé de génération de données associées à un signal numérique d'une caractéristique personnelle d'un individu, et notamment une caractéristique biométrique obtenue tel qu'illustré aux Figures 1 à 3. Il comprend en outre, une base de données BD-SIG mémorisant au moins un premier ensemble de signaux numériques de caractéristiques biométriques d'individus L et un deuxième ensemble de signaux numériques de caractéristiques biométriques d'individus R.

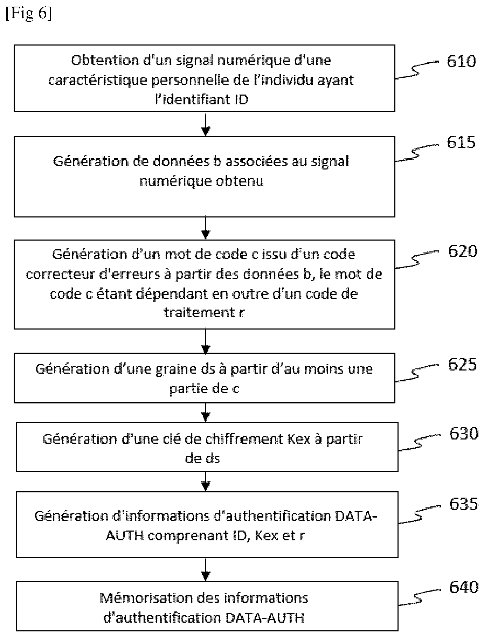

La Figure 6 illustre un mode de réalisation du procédé de génération d'informations d'authentification DATA-AUTH associées à un individu ayant un identifiant donné ID conformément au second aspect de l'invention.

L'identifiant ID de l'individu peut être un identifiant personnel ou un identifiant de groupe auquel appartient l'individu. L'identifiant ID est, par exemple, un numéro d'identification, des données personnelles comme un nom, un numéro de téléphone, une date de naissance, l'identifiant IMEI (*International Mobile Equipement Identity*) du dispositif électronique DE-AUTH, le numéro ou identifiant de la carte SIM (*Subscriber Identity Module*), un identifiant du système d'exploitation du dispositif électronique DE-AUTH, la localisation géographique du dispositif électronique DE-AUTH.

Le procédé débute par l'obtention d'un signal numérique représentant une caractéristique personnelle, telle qu'une caractéristique biométrique, de l'individu ayant ledit identifiant ID (étape 610). Le signal numérique représentant une caractéristique personnelle d'un individu sera appelé dans la suite de la description, signal numérique d'une caractéristique personnelle de l'individu. Cette étape d'obtention d'un signal numérique d'une caractéristique personnelle de l'individu est notamment réalisée par les moyens d'acquisition ACQU illustrés à la Figure 4 ou par les moyens de communication COMM ou le dispositif de capture C illustrés en Figure 4 et en Figure 5. Cette étape comprend l'acquisition d'une information connue par l'individu (mot de passe, etc) ou l'obtention d'une caractéristique propre à l'objet détenu par l'individu, ou l'acquisition d'une caractéristique propre à l'individu (caractéristique biométrique, telle qu'une photo du visage de l'individu obtenue au moyen du dispositif de capture C) ou par la réception d'un signal numérique d'une caractéristique personnelle de l'individu via les moyens de communication COMM.

L'étape 610 est suivie d'une étape de génération de données b associées au signal numérique obtenu (étape 615), consistant à coder le signal numérique obtenu. Les données b associées au signal numérique sont générées sous forme d'une chaîne binaire ou d'un vecteur binaire.

Selon un premier mode de réalisation, cette étape 615 est réalisée conformément au procédé de génération de données associées à un signal numérique illustré en Figure 2 ou en Figure 3, par exemple par le générateur de données GEN. Selon un autre mode de réalisation, cette étape est réalisée par tout autre procédé apte à générer un signal numérique sous forme d'une chaine binaire à partir d'un signal numérique d'une caractéristique personnelle d'un individu.

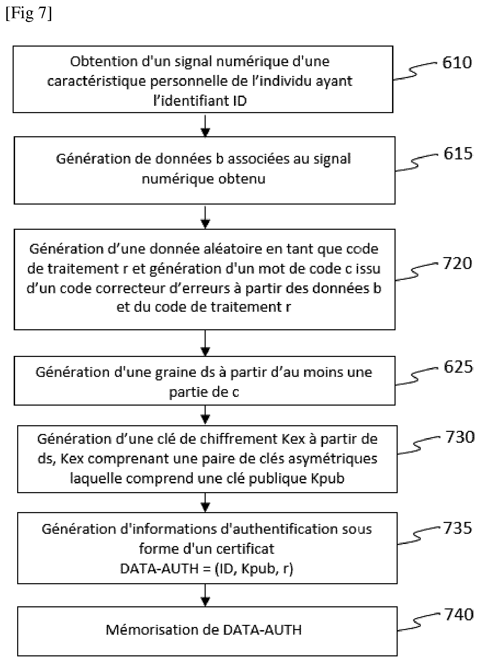

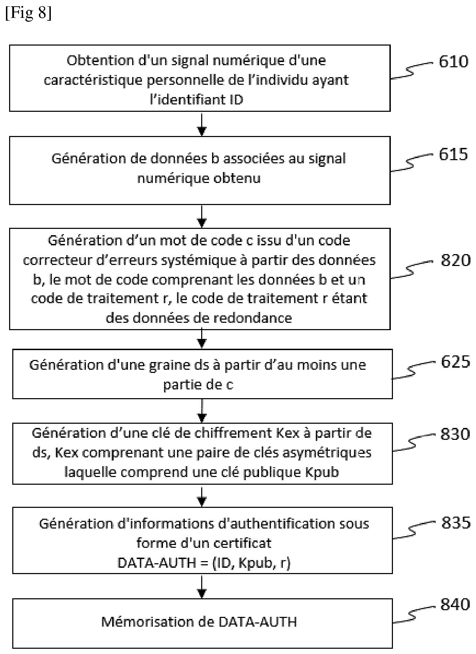

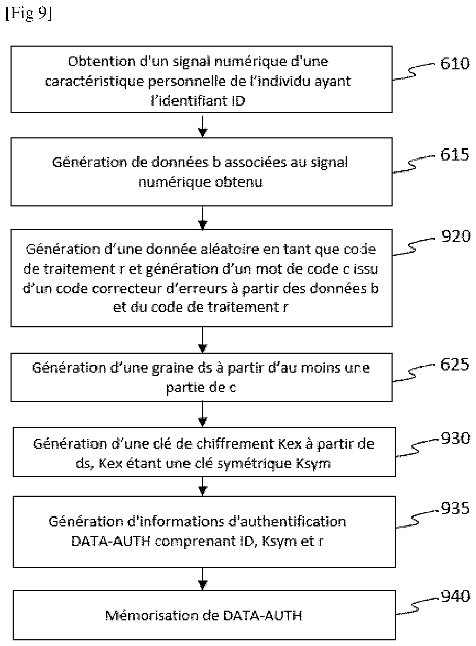

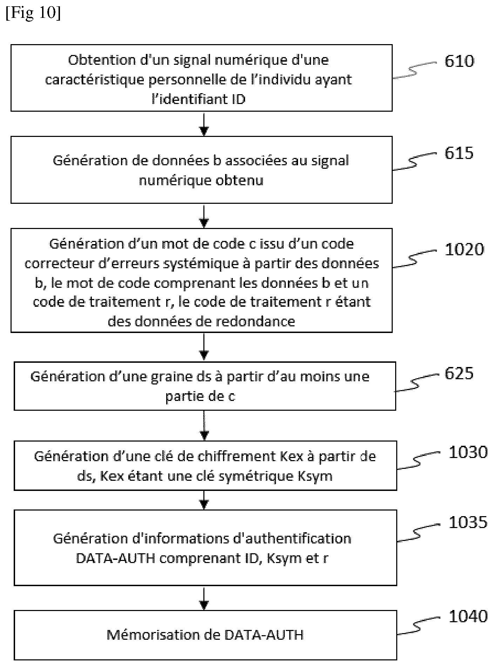

L'étape 615 est suivie d'une étape de génération d'un mot de code c issu d'un code correcteur d'erreurs à partir des données b associées au signal numérique obtenu, le mot de code c étant dépendant en outre d'un code de traitement r (étape 620). Il existe une multitude de codes correcteurs d'erreurs dont la caractéristique commune est de générer un mot à partir d'une information initiale (à savoir les données b associées au signal numérique obtenu) en y introduisant de la redondance. Un tel code correcteur d'erreurs est choisi pour corriger une quantité d'erreurs en relation avec une quantité d'erreurs statistique entre deux signaux numériques d'une caractéristique personnelle relative à un même individu. Selon des modes de réalisation particuliers, un code correcteur d'erreurs non systémique est utilisé tel qu'illustré aux Figures 7 et 9. Selon d'autres modes de réalisation particuliers, un code correcteur d'erreurs systémique est utilisé tel qu'illustré aux Figures 8 et 10. Ainsi, différents modes de réalisation du procédé de génération d'informations d'authentification DATA-AUTH seront détaillés au support des Figures 7 à 10.

L'étape 620 est suivie d'une étape de génération d'une graine ds à partir d'au moins une partie du mot de code c (étape 625). Une graine est une valeur initiale utilisée pour la détermination d'une clé de chiffrement. Selon un exemple de réalisation, cette étape est réalisée en appliquant une fonction de transformation sur tout ou partie du mot de code c. Une telle fonction peut être une fonction de hachage. Une fonction de hachage est une fonction non injective qui à partir d'une donnée de taille arbitraire et souvent de grande taille, va renvoyer une valeur de taille limitée ou fixe. Une telle fonction est notamment la fonction SHA-384.

A partir de la graine ds, une clé de chiffrement Kex est générée (étape 630). Selon des modes de réalisation décrits aux Figures 7 et 8, la clé de chiffrement Kex comprend une paire de clés asymétriques. Selon d'autres modes de réalisation décrits aux Figures 9 et 10, la clé de chiffrement Kex est une clé symétrique.

L'étape 630 est suivie d'une étape de génération d'informations d'authentification DATA-AUTH comprenant notamment l'identifiant de l'individu ID, la clé de chiffrement Kex et le code de traitement r (étape 635) et d'une étape de mémorisation des informations d'authentification DATA-AUTH (étape 640). Les informations d'authentification DATA-AUTH peuvent être mémorisées localement dans le dispositif de l'individu DE-AUTH, notamment dans une mémoire ou dans une base de données BD-AUTH tel qu'illustré en Figure 4 et en Figure 5. Selon un autre mode de réalisation, les informations d'authentification DATA-AUTH peuvent être mémorisées dans une mémoire ou dans une base de données distantes, c'est-à-dire sur un serveur distinct du dispositif DE-AUTH de l'individu.

Selon la présente invention, les informations d'authentification DATA-AUTH générées dépendent du signal numérique d'une caractéristique personnelle de l'individu sans toutefois être calculées directement à partir du mot de code c généré à partir des données b associées au signal numérique obtenu, renforçant ainsi la sécurité des informations d'authentification. Le mot de code c n'est donc pas mémorisé dans les informations d'authentification DATA-AUTH.

La Figure 7 illustre une première variante de réalisation du procédé de génération d'informations d'authentification DATA-AUTH associées à un individu ayant un identifiant donné ID conformément au second aspect de l'invention.

On ne décrira en détail ci-après que les étapes qui diffèrent de celles du mode de réalisation décrit au support de la Figure 6. Pour le reste, il est renvoyé au mode de réalisation décrit au support de la Figure 6.

Tel qu'illustré en Figure 7, l'étape 610 d'obtention d'un signal numérique d'une caractéristique personnelle de l'individu ayant ledit identifiant ID et l'étape 615 de génération de données b associées au signal numérique obtenu, précédemment décrites, sont suivies d'une étape de génération d'un mot de code c. L'étape de génération d'un mot de code c décrite précédemment au support de l'étape 620 de la Figure 6 comprend, dans cette variante de réalisation, la génération d'un code de traitement r qui est une donnée aléatoire ou pseudo-aléatoire et la génération d'un mot de code c issu d'un code correcteur d'erreurs, en particulier d'un code correcteur d'erreurs non systémique, à partir des données b associées au signal numérique obtenu et de la donnée aléatoire ou pseudo-aléatoire r (étape 720). Selon un exemple de réalisation de cette étape, la donnée aléatoire ou pseudo-aléatoire r est concaténée aux données b associées au signal numérique obtenu et le code correcteur d'erreurs est appliqué sur le résultat de la concaténation des données b et de la donnée aléatoire ou pseudo-aléatoire r, afin de générer le mode de code c.

L'étape 720 est suivie de l'étape 625 précédemment décrite de génération d'une graine ds à partir d'au moins une partie du mot de code c.

L'étape 625 est suivie d'une étape de génération d'une clé de chiffrement Kex à partir de la graine ds (étape 730). Selon cette variante de réalisation, la clé de chiffrement Kex comprend une paire de clés asymétriques, laquelle comprend une clé publique Kpub et une clé privée Kpriv. La génération de la paire de clés asymétriques est réalisée par exemple pour un chiffrement RSA ou ECDSA.

L'étape 730 est suivie d'une étape de génération d'informations d'authentification DATA-AUTH (étape 735) comprenant notamment l'identifiant de l'individu ID, la clé publique Kpub en tant que clé de chiffrement Kex et la donnée aléatoire ou pseudo-aléatoire r en tant que code de traitement r.

Selon la variante de réalisation particulier de la Figure 7, la génération des informations d'authentification DATA-AUTH consiste à générer un certificat pour l'identifiant ID comprenant au moins l'identifiant de l'individu ID, la clé publique Kpub et la donnée aléatoire ou pseudo-aléatoire r.

L'étape 735 est suivie d'une étape de mémorisation des informations d'authentification DATA-AUTH de l'individu (étape 740). Les informations d'authentification DATA-AUTH, à savoir le certificat de l'individu, peuvent être mémorisées localement dans le dispositif de l'individu DE-AUTH, notamment dans une mémoire ou dans une base de données BD-AUTH tel qu'illustré en Figure 4 et en Figure 5. Selon un autre mode de réalisation, les informations d'authentification DATA-AUTH, à savoir le certificat de l'individu, peuvent être mémorisées dans une mémoire ou dans une base de données distantes, c'est-à-dire sur un serveur distinct du dispositif de l'individu DE-AUTH.

La Figure 8 illustre une deuxième variante de réalisation du procédé de génération d'informations d'authentification DATA-AUTH associées à un individu ayant un identifiant donné ID conformément au second aspect de l'invention.

On ne décrira en détail ci-après que les étapes qui diffèrent de celles du mode de réalisation décrit au support de la Figure 6. Pour le reste, il est renvoyé au mode de réalisation décrit au support de la Figure 6.

Tel qu'illustré en Figure 8, l'étape 610 d'obtention d'un signal numérique d'une caractéristique personnelle de l'individu ayant ledit identifiant ID et l'étape 615 de génération de données b associées au signal numérique obtenu, précédemment décrites, sont suivies d'une étape de génération d'un mot de code c. L'étape de génération d'un mot de code c décrite précédemment au support de l'étape 620 de la Figure 6 comprend, dans cette variante de réalisation, la génération d'un mot de code c issu d'un code correcteur d'erreurs systémique à partir des données b associées au signal numérique obtenu (étape 820). Le mot de code c ainsi généré comprend les données b et un code de traitement r. Ce dernier est dans le cas présent des données de redondance r.

L'étape 820 est suivie de l'étape 625 précédemment décrite de génération d'une graine ds à partir d'au moins une partie du mot de code c. Selon un exemple de réalisation, l'étape de génération d'une graine ds est réalisée en appliquant une fonction de transformation sur tout ou partie du mot de code c. Selon un autre mode de réalisation, la graine ds correspond aux données de redondance, à savoir le code de traitement r.

L'étape 625 est suivie d'une étape de génération d'une clé de chiffrement Kex à partir de la graine ds (étape 830). Selon cette variante de réalisation, la clé de chiffrement Kex comprend une paire de clés asymétriques, laquelle comprend une clé publique Kpub et une clé privée Kpriv. La génération de la paire de clés asymétriques est réalisée par exemple pour un chiffrement RSA ou ECDSA.

L'étape 830 est suivie d'une étape de génération d'informations d'authentification DATA-AUTH (étape 835) comprenant notamment l'identifiant de l'individu ID, la clé publique Kpub en tant que clé de chiffrement Kex et les données de redondance r en tant que code de traitement r.

Selon le mode de réalisation particulier de la Figure 8, la génération des informations d'authentification DATA-AUTH consiste à générer un certificat pour l'identifiant ID comprenant au moins l'identifiant de l'individu ID, la clé publique Kpub et les données de redondance r.

L'étape 835 est suivie d'une étape de mémorisation des informations d'authentification DATA-AUTH de l'individu (étape 840). Les informations d'authentification DATA-AUTH, à savoir le certificat de l'individu, peuvent être mémorisées localement dans le dispositif de l'individu DE-AUTH, notamment dans une mémoire ou dans une base de données BD-AUTH tel qu'illustré en Figure 4 et en Figure 5. Selon un autre mode de réalisation, les informations d'authentification DATA-AUTH à savoir le certificat de l'individu, peuvent être mémorisées dans une mémoire ou dans une base de données distantes, c'est-à-dire sur un serveur distinct du dispositif de l'individu DE-AUTH.

La Figure 9 illustre une troisième variante de réalisation du procédé de génération d'informations d'authentification DATA-AUTH associées à un individu ayant un identifiant donné ID conformément au second aspect de l'invention.

On ne décrira en détail ci-après que les étapes qui diffèrent de celles du mode de réalisation décrit au support de la Figure 6. Pour le reste, il est renvoyé au mode de réalisation décrit au support de la Figure 6.

Tel qu'illustré en Figure 9, l'étape 610 d'obtention d'un signal numérique d'une caractéristique personnelle de l'individu ayant ledit identifiant ID et l'étape 615 de génération de données b associées au signal numérique obtenu, précédemment décrites, sont suivies d'une étape de génération d'un mot de code c. L'étape de génération d'un mot de code c décrite précédemment au support de l'étape 620 de la Figure 6 comprend, dans cette variante de réalisation, la génération d'un code de traitement r qui est une donnée aléatoire ou pseudo-aléatoire et la génération d'un mot de code c issu d'un code correcteur d'erreurs, en particulier d'un code correcteur d'erreurs non systémique, à partir des données b associées au signal numérique obtenu et de la donnée aléatoire ou pseudo-aléatoire r (étape 920). Selon un exemple de réalisation de cette étape, la donnée aléatoire ou pseudo-aléatoire r est concaténée aux données b associées au signal numérique obtenu et le code correcteur d'erreurs est appliqué sur le résultat de la concaténation des données b et de la donnée aléatoire ou pseudo-aléatoire r, afin de générer le mot de code c.

L'étape 920 est suivie de l'étape 625 précédemment décrite de génération d'une graine ds à partir d'au moins une partie du mot de code c.

L'étape 625 est suivie d'une étape de génération d'une clé de chiffrement Kex à partir de la graine ds (étape 930). Selon ce mode de réalisation, la clé de chiffrement Kex est une clé symétrique Ksym. La génération de la clé symétrique est réalisée par exemple pour un chiffrement AES.

L'étape 930 est suivie d'une étape de génération d'informations d'authentification DATA-AUTH (étape 935) comprenant notamment l'identifiant de l'individu ID, la clé symétrique Ksym en tant que clé de chiffrement Kex, et la donnée aléatoire ou pseudo-aléatoire r en tant que code de traitement r.

Selon un exemple particulier de réalisation, la clé symétrique Ksym est chiffrée à partir d'une clé publique d'un certificat d'un serveur distant. Dans ce cas, le serveur distant interviendra dans le procédé de contrôle d'identité de l'individu.

L'étape 935 est suivie d'une étape de mémorisation des informations d'authentification DATA-AUTH (étape 940). Les informations d'authentification DATA-AUTH peuvent être mémorisées localement dans le dispositif de l'individu DE-AUTH, notamment dans une mémoire ou dans une base de données BD-AUTH tel qu'illustré en Figure 4 et en Figure 5.

Dans le mode de réalisation particulier dans lequel la clé symétrique Ksym est chiffrée à partir d'une clé publique d'un certificat d'un serveur distant, ces d'informations d'authentification DATA-AUTH sont mémorisées dans une mémoire ou dans une base de données de ce serveur distant, le serveur distant disposant de la clé privée correspondant à la clé publique qui a servi à chiffrer la clé symétrique Ksym, permettant ainsi son déchiffrement.

La Figure 10 illustre une quatrième variante de réalisation du procédé de génération d'informations d'authentification DATA-AUTH associées à un individu ayant un identifiant donné ID conformément au second aspect de l'invention.

On ne décrira en détail ci-après que les étapes qui diffèrent de celles du mode de réalisation décrit au support de la Figure 6. Pour le reste, il est renvoyé au mode de réalisation décrit au support de la Figure 6.

Tel qu'illustré en Figure 10, l'étape 610 d'obtention d'un signal numérique d'une caractéristique personnelle de l'individu ayant ledit identifiant ID et l'étape 615 de génération de données b associées au signal numérique obtenu, précédemment décrites, sont suivies d'une étape de génération d'un mot de code c. L'étape de génération d'un mot de code c décrite précédemment au support de l'étape 620 de la Figure 6, comprend, dans cette variante de réalisation, la génération d'un mot de code c issu d'un code correcteur d'erreurs systémique à partir des données b associées au signal numérique obtenu (étape 1020). Le mot de code c ainsi généré comprend les données b et un code de traitement r. Ce dernier est dans le cas présent des données de redondance r.

L'étape 1020 est suivie de l'étape 625 précédemment décrite de génération d'une graine ds à partir d'au moins une partie du mot de code c. Selon un exemple de réalisation, l'étape de génération d'une graine ds est réalisée en appliquant une fonction de transformation sur tout ou partie du mot de code c. Selon un autre mode de réalisation, la graine ds correspond aux données de redondance, à savoir le code de traitement r.

L'étape 625 est suivie d'une étape de génération d'une clé de chiffrement Kex à partir de la graine ds (étape 1030). Selon ce mode de réalisation, la clé de chiffrement Kex est une clé symétrique Ksym. La génération de la clé symétrique est réalisée par exemple pour un chiffrement AES.

L'étape 1030 est suivie d'une étape de génération d'informations d'authentification DATA-AUTH (étape 1035) comprenant notamment l'identifiant de l'individu ID, la clé symétrique Ksym en tant que clé de chiffrement Kex et les données de redondance r en tant que code de traitement r.

Selon un exemple particulier de réalisation, la clé symétrique Ksym est chiffré à partir d'une clé publique d'un certificat d'un serveur distant. Dans ce cas, le serveur distant interviendra dans le procédé de contrôle d'identité de l'individu.

L'étape 1035 est suivie d'une étape de mémorisation des informations d'authentification DATA-AUTH (étape 1040). Les informations d'authentification DATA-AUTH peuvent être mémorisées localement dans le dispositif de l'individu DE-AUTH, notamment dans une mémoire ou dans une base de données BD-AUTH tel qu'illustré en Figure 4 et en Figure 5.

Dans le mode de réalisation particulier dans lequel la clé symétrique Ksym est chiffrée à partir d'une clé publique d'un certificat d'un serveur distant, ces d'informations d'authentification DATA-AUTH sont mémorisées dans une mémoire ou dans une base de données de ce serveur distant, le serveur distant disposant de la clé privée correspondant à la clé publique qui a servi à chiffrer la clé symétrique Ksym, permettant ainsi son déchiffrement.

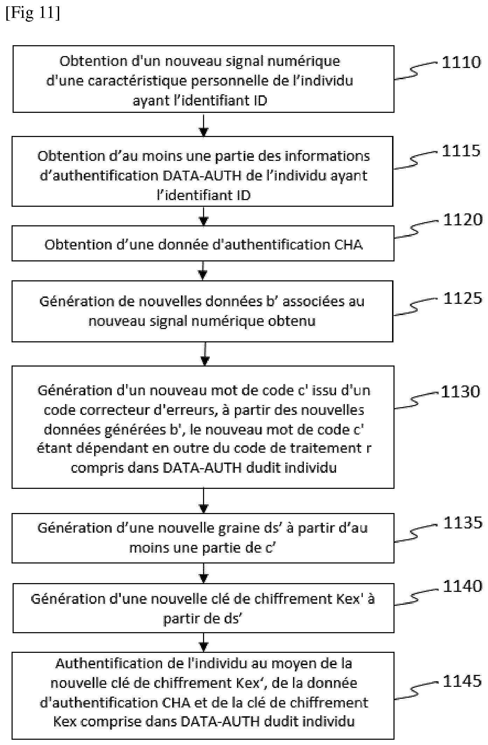

La Figure 11 illustre un mode de réalisation du procédé de contrôle d'identité d'un individu ayant un identifiant donné ID à partir d'informations d'authentification DATA-AUTH associées audit individu préalablement mémorisées, conformément au second aspect de l'invention.

Les informations d'authentification DATA-AUTH associées audit individu ont été générées par exemple, au moyen du procédé de génération d'informations d'authentification décrit précédemment au regard des Figures 6 à 10. Elles comprennent notamment l'identifiant de l'individu ID, une clé de chiffrement Kex et un code de traitement r. Le code de traitement r est un code dont dépend un mot de code c issu d'un code correcteur d'erreurs généré à partir de données b associées au signal numérique d'une caractéristique personnelle de l'individu. Le code correcteur d'erreurs a été choisi pour corriger une quantité d'erreurs en relation avec une quantité d'erreurs statistiques entre deux signaux numériques d'une caractéristique personnelle relative à un même individu. La clé de chiffrement Kex est obtenue à partir d'une graine ds générée à partir d'au moins une partie du mot de code c.

Les informations d'authentification sont stockées dans une mémoire ou une base de données BD-AUTH du dispositif client ou dans une mémoire ou une base de données d'un serveur distant.

Le procédé débute par l'obtention d'un nouveau signal numérique d'une caractéristique personnelle, telle qu'une caractéristique biométrique, de l'individu ayant ledit identifiant ID (étape 1110). Cette étape est notamment réalisée par les moyens d'acquisition ACQU illustrés à la Figure 4 ou par ou les moyens de communication COMM ou le dispositif de capture C illustrés en Figure 4 et en Figure 5. Cette étape comprend l'acquisition d'une information connue par l'individu (mot de passe, etc) ou l'obtention d'une caractéristique propre à l'objet que détient l'individu, ou l'acquisition d'une caractéristique propre à l'individu (caractéristique biométrique, telle qu'une photo du visage de l'individu obtenue au moyen du dispositif de capture C) ou par la réception d'un signal numérique d'une caractéristique personnelle de l'individu via les moyens de communication COMM.

L'étape 1110 est suivie d'une étape d'obtention d'au moins une partie des informations d'authentification DATA-AUTH de l'individu ayant l'identifiant ID (étape 1115). Selon un mode de réalisation particulier, les informations sont obtenues à partir des informations d'authentification DATA-AUTH mémorisées localement dans le dispositif de l'individu DE-AUTH, notamment dans une mémoire ou dans une base de données BD-AUTH tel qu'illustré en Figure 4 et en Figure 5. Selon un autre mode de réalisation, les informations sont obtenues à partir des informations d'authentification DATA-AUTH mémorisées dans une mémoire ou dans une base de données distantes, c'est-à-dire sur un serveur distinct du dispositif DE-AUTH de l'individu.

L'étape 1115 est suivie d'une étape d'obtention d'une donnée d'authentification CHA (étape 1120). Une données d'authentification peut être un message à signer.

L'étape 1120 est suivie d'une étape de génération de nouvelles données b' associées au nouveau signal numérique obtenu (étape 1125). Les nouvelles données b' associées au nouveau signal numérique obtenu sont générées sous forme d'une chaîne binaire ou d'un vecteur binaire.

Selon un premier mode de réalisation, cette étape 1125 est réalisée conformément au procédé de génération de données associées à un signal numérique illustré en Figure 2 ou en Figure 3, par exemple par le générateur de données GEN. Selon un autre mode de réalisation, cette étape est réalisée par tout autre procédé apte à générer un signal numérique sous forme d'une chaine binaire à partir d'un signal numérique d'une caractéristique personnelle d'un individu.

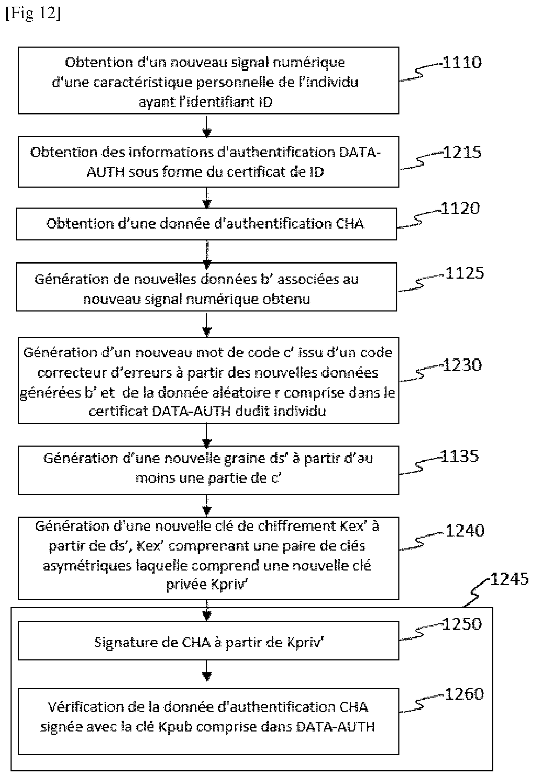

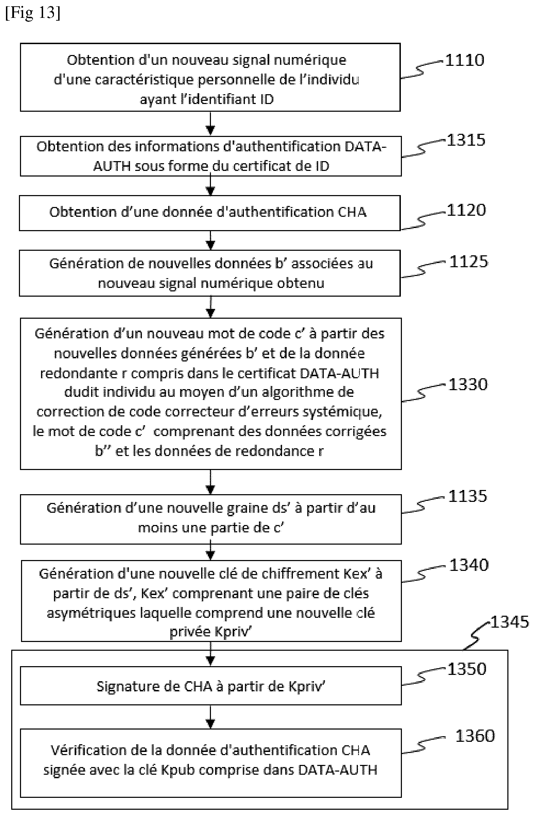

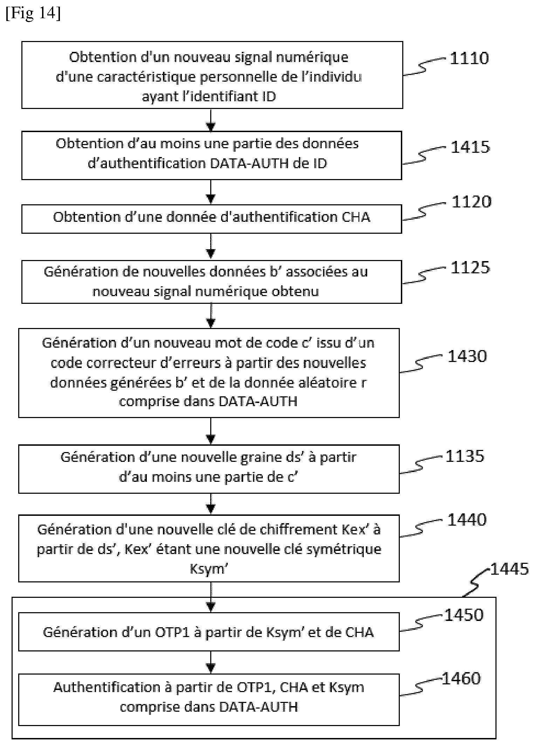

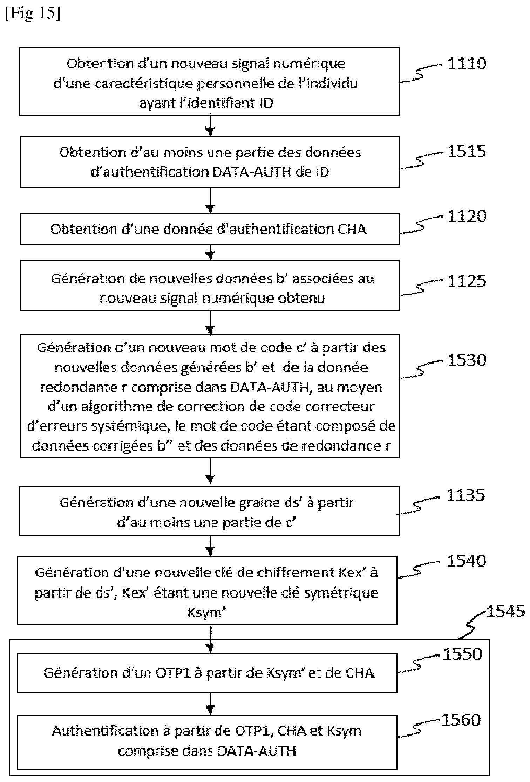

L'étape 1125 est suivie d'une étape de génération d'un nouveau mot de code c' (étape 1130) issu d'un code correcteur d'erreurs à partir des nouvelles données b' associées au nouveau signal numérique obtenu, le nouveau mot de code c' étant dépendant en outre du code de traitement r compris dans les informations d'authentification DATA-AUTH dudit individu. Un tel code correcteur d'erreurs est choisi pour corriger une quantité d'erreurs en relation avec une quantité d'erreurs statistique entre deux signaux numériques d'une caractéristique personnelle relative à un même individu. Bien entendu, le code correcteur d'erreurs utilisé pour le contrôle de l'identité de l'individu est le même que celui utilisé pour générer les informations d'authentification DATA-AUTH dudit individu. Selon des modes de réalisation, un code correcteur d'erreurs non systémique est utilisé tel qu'illustré aux Figures 12 et 14. Selon d'autres modes de réalisation, un code correcteur d'erreurs systémique est utilisé tel qu'illustré aux Figures 13 et 15. Ainsi, différents modes de réalisation de l'étape 1130 seront détaillés au support des Figures 12 à 15.

L'étape 1130 est suivie d'une étape de génération d'une nouvelle graine ds' à partir d'au moins une partie du nouveau mot de code c' (étape 1135). Selon un exemple de réalisation, cette étape est réalisée en appliquant une fonction de transformation sur tout ou partie du nouveau mot de code c'. Une telle fonction peut être une fonction de hachage. Une fonction de hachage est une fonction non injective qui à partir d'une donnée de taille arbitraire et souvent de grande taille, va renvoyer une valeur de taille limitée ou fixe. Une telle fonction est notamment la fonction SHA-384.

A partir de la nouvelle graine ds', une nouvelle clé de chiffrement Kex' est générée (étape 1140). Selon des modes de réalisation décrits aux Figures 12 et 13, la nouvelle clé de chiffrement Kex' comprend une paire de clés asymétriques. Selon d'autres modes de réalisation décrits aux Figures 14 et 15, la nouvelle clé de chiffrement Kex' est une clé symétrique.

L'étape 1140 est suivie d'une étape d'authentification de l'individu (étape 1145) au moyen de la nouvelle clé de chiffrement Kex', de la donnée d'authentification CHA obtenue et de la clé de chiffrement Kex comprise dans les informations d'authentification DATA-AUTH dudit individu, afin de contrôler l'identité dudit individu.

La Figure 12 illustre une première variante de réalisation du procédé de contrôle d'identité d'un individu ayant un identifiant donné ID à partir d'informations d'authentification DATA-AUTH associées audit individu préalablement mémorisées conformément au second aspect de l'invention.

Dans cette variante de réalisation, les informations d'authentification DATA-AUTH de l'individu sont mémorisées par exemple, sous la forme d'un certificat pour l'identifiant ID, et comprennent au moins l'identifiant ID de l'individu, une clé publique Kpub en tant que clé de chiffrement Kex et une donnée aléatoire ou pseudo-aléatoire en tant que code de traitement r. Ces informations d'authentification DATA-AUTH sont par exemple générées conformément au procédé de génération d'informations d'authentification décrit au support de la Figure 7.

On ne décrira en détail ci-après que les étapes qui diffèrent de celles du mode de réalisation décrit au support de la Figure 11. Pour le reste, il est renvoyé au mode de réalisation décrit au support de la Figure 11.

L'étape 1110 d'obtention d'un nouveau signal numérique d'une caractéristique personnelle de l'individu ayant ledit identifiant ID est suivie d'une étape d'obtention des informations d'authentification DATA-AUTH de l'individu ayant l'identifiant ID (étape 1215). Cette étape comprend notamment l'obtention du certificat de l'individu. Le certificat peut être lu à partir d'une mémoire ou d'une base de données BD-AUTH du dispositif DE-AUTH de l'individu ou d'une mémoire ou d'une base de données d'un serveur distant.

L'étape 1215 est suivie d'une étape d'obtention d'une donnée d'authentification CHA (étape 1120). La donnée d'authentification peut être un message à signer.

L'étape 1120 est suivie de l'étape de génération de nouvelles données b' associées au nouveau signal numérique obtenu (étape 1125) précédemment décrite au support de la Figure 11.

Les étapes 1215, 1120 et 1125 peuvent être réalisées selon un ordre différent.

L'étape 1125 est suivie d'une étape de génération d'un nouveau mot de code c'. Cette étape précédemment décrite au support de l'étape 1130 de la Figure 11, comprend, dans cette variante de réalisation, la génération d'un nouveau mot de code c' issu d'un code correcteur d'erreurs, en particulier d'un code correcteur d'erreurs non systémique, à partir des nouvelles données b' associées au nouveau signal numérique obtenu et de la donnée aléatoire ou pseudo-aléatoire r comprise dans le certificat de l'individu (étape 1230). Pour réaliser cette étape, la donnée aléatoire ou pseudo-aléatoire r est concaténée aux nouvelles données b' associées au nouveau signal numérique obtenu et le code correcteur d'erreurs est appliqué sur le résultat de la concaténation des nouvelles données b' et de la donnée aléatoire ou pseudo-aléatoire r, afin de générer le nouveau mot de code c'.

L'étape 1230 est suivie de l'étape de génération d'une nouvelle graine ds' à partir d'au moins une partie du nouveau mot de code c' (étape 1135 précédemment décrite).

L'étape 1135 est suivie d'une étape de génération d'une nouvelle clé de chiffrement Kex' à partir de la nouvelle graine ds' (étape 1240). Dans ce mode de réalisation, la nouvelle clé de chiffrement Kex' comprend une paire de clés asymétriques laquelle comprend une nouvelle clé publique Kpub' et une nouvelle clé privée Kpriv'. La génération de la paire de clés asymétriques est réalisée par exemple pour un chiffrement RSA ou ECDSA.

L'étape 1240 est suivie de l'authentification de l'individu (étape 1245).

Selon cette variante de réalisation, l'authentification (étape 1245) comprend les étapes 1250 et 1260. L'étape 1250 comprend la signature de la donnée d'authentification CHA à partir de la nouvelle clé privée Kpriv' au moyen d'un algorithme de chiffrement à clé asymétrique tel que AES ou ECDSA. L'étape 1250 est suivie d'une étape 1260 de vérification de la donnée d'authentification CHA signée au moyen de la clé publique Kpub comprise dans les informations d'authentification DATA-AUTH, notamment le certificat de l'individu, afin de contrôler l'identité dudit individu.

Selon un mode de réalisation particulier dans lequel le certificat de l'individu est mémorisé sur un serveur distant, l'étape 1260 peut être réalisée sur ce serveur distant.

Selon une alternative de réalisation des étapes 1250 et 1260, l'authentification de l'individu comprend les étapes suivantes : une étape de signature de la donnée d'authentification CHA à partir de la clé publique Kpub comprise dans les informations d'authentification DATA-AUTH de l'individu, notamment le certificat de l'individu et une étape de vérification de la donnée d'authentification CHA signée, au moyen de la nouvelle clé privée Kpriv' afin de contrôler l'identité dudit individu. Cette dernière étape est notamment réalisée par le déchiffrement de la donnée d'authentification CHA signée en utilisant la nouvelle clé privée Kpriv'. Si la donnée d'authentification déchiffrée correspond à la donnée d'authentification CHA, alors le contrôle d'identité de l'individu est validé.

La Figure 13 illustre une deuxième variante de réalisation du procédé de contrôle d'identité d'un individu ayant un identifiant donné ID à partir d'informations d'authentification DATA-AUTH associées audit individu préalablement mémorisées conformément au second aspect de l'invention.

Dans cette variante de réalisation, les informations d'authentification DATA-AUTH de l'individu sont mémorisées par exemple, sous la forme d'un certificat pour l'identifiant ID, qui comprennent au moins l'identifiant ID de l'individu, une clé publique Kpub en tant que clé de chiffrement Kex et des données de redondance en tant que code de traitement r. Ces informations d'authentification DATA-AUTH sont par exemple générées conformément au procédé de génération d'informations d'authentification décrit au support de la Figure 8.

On ne décrira en détail ci-après que les étapes qui diffèrent de celles du mode de réalisation décrit au support de la Figure 11. Pour le reste, il est renvoyé au mode de réalisation décrit au support de la Figure 11.

L'étape 1110 d'obtention d'un nouveau signal numérique d'une caractéristique personnelle de l'individu ayant ledit identifiant ID est suivie d'une étape d'obtention des informations d'authentification DATA-AUTH de l'individu ayant l'identifiant ID (étape 1315). Cette étape comprend notamment l'obtention du certificat de l'individu. Le certificat peut être lu à partir d'une mémoire ou d'une base de données BD-AUTH du dispositif DE-AUTH de l'individu ou d'une mémoire ou d'une base de données d'un serveur distant.

L'étape 1315 est suivie d'une étape d'obtention d'une donnée d'authentification CHA (étape 1120). La donnée d'authentification peut être un message à signer.

L'étape 1120 est suivie de l'étape de génération de nouvelles données b' associées au nouveau signal numérique obtenu (étape 1125) précédemment décrite au support de la Figure 11.

Les étapes 1315, 1120 et 1125 peuvent être réalisées selon un ordre différent.

L'étape 1125 est suivie d'une étape de génération d'un nouveau mot de code c'. Cette étape précédemment décrite au support de l'étape 1130 de la Figure 11, comprend, dans cette variante de réalisation, la génération d'un nouveau mot de code c' issu d'un algorithme de correction de code correcteur d'erreurs systémique, à partir des nouvelles données b' associées au nouveau signal numérique obtenu et des données de redondance r comprises dans les informations d'authentification DATA-AUTH, notamment dans le certificat de l'individu (étape 1330). Le nouveau mot de code c' ainsi obtenu comprend des données b" correspondant aux nouvelles données b' associées au nouveau signal numérique obtenu, après correction, et les données de redondance r correspondant aux données de redondance r comprises dans les informations d'authentification DATA-AUTH, notamment dans le certificat de l'individu.

L'étape 1330 est suivie de l'étape de génération d'une nouvelle graine ds' à partir d'au moins une partie du nouveau mot de code c' (étape 1135 précédemment décrite).

L'étape 1135 est suivie d'une étape de génération d'une nouvelle clé de chiffrement Kex' à partir de la nouvelle graine ds' (étape 1340). Dans ce mode de réalisation, la nouvelle clé de chiffrement Kex' comprend une paire de clés asymétriques laquelle comprend une nouvelle clé publique Kpub' et une nouvelle clé privée Kpriv'. La génération de la paire de clés asymétriques est réalisée par exemple pour un chiffrement RSA ou ECDSA.

L'étape 1340 est suivie de l'authentification de l'individu (étape 1345).

Selon cette variante de réalisation, l'authentification (étape 1345) comprend les étapes 1350 et 1360. L'étape 1350 comprend la signature de la donnée d'authentification CHA à partir de la nouvelle clé privée Kpriv' au moyen d'un algorithme de chiffrement à clé asymétrique tel que AES ou ECDSA. L'étape 1350 est suivie d'une étape 1360 de vérification de la donnée d'authentification CHA signée au moyen de la clé publique Kpub comprise dans les informations d'authentification DATA-AUTH, notamment le certificat de l'individu, afin de contrôler l'identité dudit individu.

Selon un mode de réalisation particulier dans lequel le certificat de l'individu est mémorisé sur un serveur distant, l'étape 1360 peut être réalisée sur ce serveur distant.

Selon une alternative de réalisation des étapes 1350 et 1360, l'authentification de l'individu comprend les étapes suivantes : une étape de signature de la donnée d'authentification CHA à partir de la clé publique Kpub comprise dans les informations d'authentification DATA-AUTH de l'individu, notamment le certificat de l'individu et une étape de vérification de la donnée d'authentification CHA signée, au moyen de la nouvelle clé privée Kpriv' afin de contrôler l'identité dudit individu. Cette dernière étape est notamment réalisée par le déchiffrement de la donnée d'authentification CHA signée en utilisant la nouvelle clé privée Kpriv'. Si la donnée d'authentification déchiffrée correspond à la donnée d'authentification CHA, alors le contrôle d'identité est validé.

La Figure 14 illustre une troisième variante de réalisation du procédé de contrôle d'identité d'un individu ayant un identifiant donné ID à partir d'informations d'authentification DATA-AUTH associées audit individu préalablement mémorisées conformément au second aspect de l'invention.

Dans cette variante de réalisation, les informations d'authentification DATA-AUTH de l'individu comprennent au moins l'identifiant ID de l'individu, une clé symétrique Ksym en tant que clé de chiffrement mémorisée Kex et une donnée aléatoire ou pseudo-aléatoire en tant que code de traitement r. Ces informations d'authentification DATA-AUTH sont par exemple générées conformément au procédé de génération d'informations d'authentification décrit au support de la Figure 9. Selon un mode de réalisation particulier, la clé symétrique Ksym est chiffrée, par exemple au moyen d'une clé publique d'un serveur distant.

On ne décrira en détail ci-après que les étapes qui diffèrent de celles du mode de réalisation décrit au support de la Figure 11. Pour le reste, il est renvoyé au mode de réalisation décrit au support de la Figure 11.

Dans ce mode de réalisation, l'étape 1110 d'obtention d'un nouveau signal numérique d'une caractéristique personnelle de l'individu ayant ledit identifiant ID est suivie d'une étape d'obtention d'au moins une partie des informations d'authentification DATA-AUTH de l'individu ayant l'identifiant ID (étape 1415). Ces informations d'authentification DATA-AUTH peuvent être lues à partir d'une mémoire ou d'une base de données BD-AUTH du dispositif DE-AUTH de l'individu ou d'une mémoire ou d'une base de données d'un serveur distant.

L'étape 1415 est suivie d'une étape d'obtention d'une donnée d'authentification CHA (étape 1120). La donnée d'authentification peut être un message à signer.

Selon un mode de réalisation particulier, dans lequel les informations d'authentification DATA-AUTH sont mémorisées sur un serveur distant, le code de traitement r et la donnée d'authentification CHA peuvent être transmis de ce serveur distant au dispositif DE-AUTH de l'individu soit via un message soit via un code matriciel, tel qu'un code QR à scanner par le dispositif DE-AUTH de l'individu.

L'étape 1120 est suivie de l'étape de génération de nouvelles données b' associées au nouveau signal numérique obtenu (étape 1125) précédemment décrite au support de la Figure 11.

Les étapes 1415, 1120 et 1125 peuvent être réalisées selon un ordre différent.

L'étape 1125 est suivie d'une étape de génération d'un nouveau mot de code c'. Cette étape précédemment décrite au support de l'étape 1130 de la Figure 11 comprend, dans cette variante de réalisation, la génération d'un nouveau mot de code c' issu d'un code correcteur d'erreurs, en particulier d'un code correcteur d'erreurs non systémique, à partir des nouvelles données b' associées au nouveau signal numérique obtenu et de la donnée aléatoire ou pseudo-aléatoire r comprise dans les informations d'authentification DATA-AUTH (étape 1430). Pour réaliser cette étape, la donnée aléatoire ou pseudo-aléatoire r est concaténée aux nouvelles données b' associées au nouveau signal numérique obtenu et le code correcteur d'erreurs est appliqué sur le résultat de la concaténation des nouvelles données b' et de la donnée aléatoire ou pseudo-aléatoire r, afin de générer le nouveau mot de code c'.

L'étape 1430 est suivie de l'étape de génération d'une nouvelle graine ds' à partir d'au moins une partie du nouveau mot de code c' (étape 1135 précédemment décrite).

L'étape 1135 est suivie d'une étape de génération d'une nouvelle clé de chiffrement Kex' à partir de la nouvelle graine ds' (étape 1440). Dans ce mode de réalisation, la nouvelle clé de chiffrement Kex' est une nouvelle clé symétrique générée Ksym'. La génération de la clé symétrique est réalisée par exemple pour un chiffrement AES.

L'étape 1440 est suivie de l'authentification de l'individu (étape 1445).

Selon cette variante de réalisation, l'authentification (étape 1445) comprend les étapes 1450 et 1460. L'étape 1450 est une étape de génération d'un premier code d'authentification OTP1 à partir de la donnée d'authentification CHA et de la nouvelle clé symétrique Ksym'. Ce premier code d'authentification OTP1 est par exemple un mot de passe à usage unique.

L'étape 1450 est suivie d'une étape d'authentification de l'individu à partir du premier code d'authentification OTP1 (étape 1460). Dans le mode de réalisation dans lequel les informations d'authentification DATA-AUTH sont mémorisées dans le dispositif DE-AUTH de l'individu, alors l'authentification est réalisée localement dans le dispositif DE-AUTH de l'individu. Dans le mode de réalisation dans lequel les informations d'authentification DATA-AUTH sont mémorisées sur un serveur distant, le premier code d'authentification OTP1 doit être transmis à ce serveur pour la réalisation de cette authentification. Cette transmission peut être réalisée par l'envoi d'un message du dispositif DE-AUTH de l'individu au serveur distant ou par la saisie de ce premier code d'authentification OTP1 par l'individu sur le site, notamment le site web, du serveur distant.

Cette étape d'authentification de l'individu (étape 1460) comprend la génération d'un deuxième code d'authentification OTP2 à partir de la clé symétrique Ksym comprise dans les informations d'authentification DATA-AUTH de l'individu et de la donnée d'authentification CHA, puis la comparaison du premier code d'authentification OTP1 avec le deuxième code d'authentification OTP2 afin de valider ou non le contrôle d'identité de l'individu. Dans le mode de réalisation particulier dans lequel la clé symétrique Ksym comprise dans les informations d'authentification DATA-AUTH est chiffrée, cette clé est déchiffrée préalablement à la génération du deuxième code d'authentification OTP2.

La Figure 15 illustre une quatrième variante de réalisation du procédé de contrôle d'identité d'un individu ayant un identifiant donné ID à partir d'informations d'authentification DATA-AUTH associées audit individu préalablement mémorisées conformément au second aspect de l'invention.

Dans cette variante de réalisation, les informations d'authentification DATA-AUTH de l'individu comprennent au moins l'identifiant ID de l'individu, une clé symétrique Ksym en tant que clé de chiffrement mémorisée Kex et des données de redondance en tant que code de traitement r. Ces informations d'authentification DATA-AUTH sont par exemple générées conformément au procédé de génération d'informations d'authentification décrit au support de la Figure 10. Selon un mode de réalisation particulier, la clé symétrique Ksym est chiffrée, par exemple au moyen d'une clé publique d'un serveur distant.

On ne décrira en détail ci-après que les étapes qui diffèrent de celles du mode de réalisation décrit au support de la Figure 11. Pour le reste, il est renvoyé au mode de réalisation décrit au support de la Figure 11.

Dans ce mode de réalisation, l'étape 1110 d'obtention d'un nouveau signal numérique d'une caractéristique personnelle de l'individu ayant ledit identifiant ID est suivie d'une étape d'obtention d'au moins une partie des informations d'authentification DATA-AUTH de l'individu ayant l'identifiant ID (étape 1515). Ces informations d'authentification DATA-AUTH peuvent être lues à partir d'une mémoire ou d'une base de données BD-AUTH du dispositif DE-AUTH de l'individu ou d'une mémoire ou d'une base de données d'un serveur distant.

L'étape 1515 est suivie d'une étape d'obtention d'une donnée d'authentification CHA qui peut être un message à signer (étape 1120).

Selon un mode de réalisation particulier, dans lequel les informations d'authentification DATA-AUTH sont mémorisées sur un serveur distant, le code de traitement r et la donnée d'authentification CHA peuvent être transmis de ce serveur distant au dispositif DE-AUTH de l'individu soit via un message soit via un code matriciel, tel qu'un code QR à scanner par le dispositif DE-AUTH de l'individu.

L'étape 1120 est suivie de l'étape de génération de nouvelles données b' associées au nouveau signal numérique obtenu (étape 1125) précédemment décrite au support de la Figure 11.

Les étapes 1515, 1120 et 1125 peuvent être réalisées selon un ordre différent.

L'étape 1125 est suivie d'une étape de génération d'un nouveau mot de code c'. Cette étape précédemment décrite au support de l'étape 1130 de la Figure 11, comprend, dans cette variante de réalisation, la génération d'un nouveau mot de code c' issu d'un algorithme de correction de code correcteur d'erreurs systémique, à partir des nouvelles données b' associées au nouveau signal numérique obtenu et des données de redondance r comprises dans les informations d'authentification DATA-AUTH, notamment dans le certificat de l'individu (étape 1530). Le nouveau mot de code c' ainsi obtenu comprend des données b" correspondant aux nouvelles données b' associées au nouveau signal numérique obtenu, après correction, et les données de redondance r. Ce dernier est dans le cas présent les données de redondance r correspondant aux données de redondance r comprises dans les informations d'authentification DATA-AUTH.

L'étape 1530 est suivie de l'étape de génération d'une nouvelle graine ds' à partir d'au moins une partie du nouveau mot de code c' (étape 1135 précédemment décrite).

L'étape 1135 est suivie d'une étape de génération d'une nouvelle clé de chiffrement Kex' à partir de la nouvelle graine ds' (étape 1540). Dans ce mode de réalisation, la nouvelle clé de chiffrement Kex' est une nouvelle clé symétrique Ksym'. La génération de la clé symétrique est réalisée par exemple pour un chiffrement AES.

L'étape 1540 est suivie de l'authentification de l'individu (étape 1545).

Selon cette variante de réalisation, l'authentification (étape 1545) comprend les étapes 1550 et 1560. L'étape 1550 est une étape de génération d'un premier code d'authentification OTP1 à partir de la donnée d'authentification CHA et de la nouvelle clé symétrique Ksym'. Ce code d'authentification OTP1 est par exemple un mot de passe à usage unique.

L'étape 1550 est suivie d'une étape d'authentification de l'individu à partir du premier code d'authentification OTP1 (étape 1560). Dans le mode de réalisation dans lequel les informations d'authentification DATA-AUTH sont mémorisées dans le dispositif DE-AUTH de l'individu, alors l'authentification est réalisée localement dans le dispositif DE-AUTH de l'individu. Dans le mode de réalisation dans lequel les informations d'authentification DATA-AUTH sont mémorisées sur un serveur distant, le premier code d'authentification OTP1 doit être transmis à ce serveur pour la réalisation de cette authentification. Cette transmission peut être réalisée par l'envoi d'un message du dispositif DE-AUTH de l'individu au serveur distant ou par la saisie de ce premier code d'authentification OTP1 par l'individu sur le site, notamment le site web, du serveur distant.

Cette étape d'authentification de l'individu (étape 1560) comprend la génération d'un deuxième code d'authentification OTP2 à partir de la clé symétrique Ksym comprise dans les informations d'authentification DATA-AUTH de l'individu et de la donnée d'authentification CHA, puis la comparaison du premier code d'authentification OTP1 avec le deuxième code d'authentification OTP2 afin de valider ou non le contrôle d'identité de l'individu. Dans le mode de réalisation particulier dans lequel la clé symétrique Ksym comprise dans les informations d'authentification DATA-AUTH est chiffrée, cette clé est déchiffrée préalablement à la génération du deuxième code d'authentification OTP2.

## Revendications

1. Procédé de génération de données associées à un signal numérique d'une caractéristique personnelle d'un individu, au moyen d'un premier ensemble de signaux numériques (L) et d'un deuxième ensemble de signaux numériques (R), les signaux numériques du premier ensemble (L) et du deuxième ensemble (R) comprenant chacun un signal numérique d'une caractéristique personnelle d'individu,
le procédé étant mis en œuvre dans un dispositif électronique (DE) comprenant un dispositif de capture (C) permettant l'obtention d'un signal numérique (S),
le procédé comprend
• l'obtention du signal numérique (S) d'une caractéristique personnelle de l'individu (210, 310) au moyen du dispositif de capture (C) ;
• la génération d'un vecteur binaire V[1...n] de longueur n au moyen des étapes suivantes :
a. une étape de sélection d'un signal numérique du premier ensemble de signaux numériques (L) (230, 330) ;
b. une étape de sélection d'un signal numérique du deuxième ensemble de signaux numériques (R) (235, 335) ;
c. c. une étape de détermination du signal numérique le plus proche du signal numérique obtenu (S) entre le signal numérique sélectionné du premier ensemble (L) et le signal numérique sélectionné du deuxième ensemble (R) (240, 340) ;
d. une étape d'insertion d'un élément binaire à 1 dans le vecteur binaire V[i] si le signal numérique sélectionné du premier ensemble (L) est plus proche du signal numérique obtenu (S) et d'un élément binaire à 0 dans le cas contraire (S) (250, 255, 350, 355) ;
• la réitération des étapes a. à d. pour une pluralité n de signaux numériques du premier ensemble (L) et pour une pluralité n de signaux numériques du deuxième ensemble (R), l'élément binaire à 1 ou 0 étant inséré à une i^{ème} position respective correspondante du vecteur binaire, avec i = 1 ... n ;
• la délivrance du vecteur binaire V en tant que données associées au signal numérique obtenu (270, 370).

2. Procédé selon la revendication 1, dans lequel le signal numérique obtenu (S) et les signaux numériques du premier ensemble (L) et du deuxième ensemble (R) sont générés par extraction des caractéristiques d'un signal numérique brut.

3. Procédé selon l'une quelconque des revendications précédentes, dans lequel le signal numérique obtenu (S) et les signaux numériques du premier ensemble (L) et du deuxième ensemble (R) comprennent chacun un signal numérique d'une caractéristique d'un dispositif.

4. Procédé selon la revendication 1 ou la revendication 2, dans lequel le signal numérique obtenu (S) et les signaux numériques du premier ensemble (L) et du deuxième ensemble (R) comprennent chacun un signal numérique d'une caractéristique biométrique.

5. Procédé selon la revendication précédente, dans lequel le signal numérique d'une caractéristique biométrique représente une image d'un individu.

6. Procédé selon la revendication précédente, dans lequel l'image d'un individu représente une image photographique d'individu.

7. Procédé selon la revendication 4, dans lequel le signal numérique d'une caractéristique biométrique représente un ensemble de points d'intérêt extraits d'une image d'un individu.

8. Procédé selon la revendication 4, dans lequel le signal numérique d'une caractéristique biométrique représente une image auditive d'un individu.

9. Procédé selon l'une quelconque des revendications 1 à 2 ou 4 à 8, dans lequel l'étape d'obtention du signal numérique comprend la réalisation d'une mesure biométrique.

10. Procédé selon l'une quelconque des revendications 1 à 4, dans lequel l'étape
c. de détermination du signal numérique le plus proche du signal numérique obtenu (S) entre le signal numérique sélectionné du premier ensemble (L) et le signal numérique sélectionné du deuxième ensemble (R) comprend :
- un calcul d'une première distance entre le signal numérique obtenu (S) et le signal numérique sélectionné du premier ensemble (L) ;
- un calcul d'une deuxième distance entre le signal numérique obtenu (S) et le signal numérique sélectionné du deuxième ensemble (R) ;
- une étape de comparaison de la première distance avec la deuxième distance afin de déterminer la distance la plus petite,
• si la première distance est la distance la plus petite alors le signal numérique sélectionné du premier ensemble (L) est plus proche du signal numérique obtenu (S) et
• dans le cas contraire, le signal numérique sélectionné du deuxième ensemble (R) est plus proche du signal numérique obtenu (S).

11. Procédé selon la revendication précédente, dans lequel la première distance entre le signal numérique obtenu (S) et le signal numérique sélectionné du premier ensemble (L) et la deuxième distance entre le signal numérique obtenu (S) et le signal numérique sélectionné du deuxième ensemble (R) sont des distances euclidiennes.

12. Procédé selon l'une quelconque des revendications précédentes, dans lequel
- chaque signal numérique du premier ensemble (L) et du deuxième ensemble (R) est défini en outre par sa position dans l'ensemble, et
- le signal numérique sélectionné dans le premier ensemble (L) et le signal numérique sélectionné dans le deuxième ensemble (R) ont la même position dans le premier et le deuxième ensemble respectivement.

13. Dispositif configuré pour mettre en œuvre le procédé selon l'une quelconque des revendications précédentes.

## Patentansprüche

1. Verfahren zur Erzeugung von Daten, die mit einem digitalen Signal eines persönlichen Merkmals einer Person verbunden sind, mittels einer ersten Anordnung digitaler Signale (L) und einer zweiten Anordnung digitaler Signale (R), wobei die digitalen Signale der ersten Anordnung (L) und der zweiten Anordnung (R) jeweils ein digitales Signal eines persönlichen Merkmals einer Person umfassen, wobei das Verfahren in einer elektronischen Vorrichtung (DE) implementiert wird, die eine Erfassungsvorrichtung (C) zum Erhalten eines digitalen Signals (S) umfasst,
wobei das Verfahren Folgendes umfasst:
- Erhalten des digitalen Signals (S) eines persönlichen Merkmals der Person (210, 310) mittels der Erfassungsvorrichtung (C);
- Erzeugen eines binären Vektors V[1...n] der Länge n mittels der folgenden Schritte:
a. einen Schritt des Auswählens eines digitalen Signals aus der ersten Anordnung digitaler Signale (L) (230, 330);
b. einen Schritt des Auswählens eines digitalen Signals aus der zweiten Anordnung digitaler Signale (R) (235, 335);
c. einen Schritt des Bestimmens des digitalen Signals, das dem erhaltenen digitalen Signal (S) am nächsten liegt, unter dem ausgewählten digitalen Signal aus der ersten Anordnung (L) und dem ausgewählten digitalen Signal aus der zweiten Anordnung (R) (240, 340);
d. einen Schritt des Einfügens eines binären Elements 1 in den binären Vektor V[i], wenn das ausgewählte digitale Signal aus der ersten Anordnung (L) näher am erhaltenen digitalen Signal (S) ist, und eines binären Elements 0 im gegenteiligen Fall (S) (250, 255, 350, 355);
- Wiederholen der Schritte a. bis d. für eine Vielzahl n von digitalen Signalen aus der ersten Anordnung (L) und für eine Vielzahl n von digitalen Signalen aus der zweiten Anordnung (R), wobei das binäre Element 1 oder 0 an einer i entsprechenden jeweiligen Position des binären Vektors eingefügt wird, wobei i = 1 ... n;
- Übermitteln des binären Vektors V als Daten, die mit dem erhaltenen digitalen Signal (270, 370) verbunden sind.

2. Verfahren nach Anspruch 1, wobei das erhaltene digitale Signal (S) und die digitalen Signale aus der ersten Anordnung (L) und der zweiten Anordnung (R) durch Extrahieren der Merkmale eines rohen digitalen Signals erzeugt werden.

3. Verfahren nach einem der vorstehenden Ansprüche, wobei das erhaltene digitale Signal (S) und die digitalen Signale aus der ersten Anordnung (L) und der zweiten Anordnung (R) jeweils ein digitales Signal eines Merkmals einer Vorrichtung umfassen.

4. Verfahren nach Anspruch 1 oder Anspruch 2, wobei das erhaltene digitale Signal (S) und die digitalen Signale aus der ersten Anordnung (L) und der zweiten Anordnung (R) jeweils ein digitales Signal eines biometrischen Merkmals umfassen.

5. Verfahren nach dem vorstehenden Anspruch, wobei das digitale Signal eines biometrischen Merkmals ein Bild einer Person darstellt.

6. Verfahren nach dem vorstehenden Anspruch, wobei das Bild einer Person ein fotografisches Bild einer Person darstellt.

7. Verfahren nach Anspruch 4, wobei das digitale Signal eines biometrischen Merkmals eine Anordnung von Punkten von Interesse darstellt, die aus einem Bild einer Person extrahiert wurden.

8. Verfahren nach Anspruch 4, wobei das digitale Signal eines biometrischen Merkmals ein auditives Bild einer Person darstellt.

9. Verfahren nach einem der Patentansprüche 1 bis 2 oder 4 bis 8, wobei der Schritt des Erhaltens des digitalen Signals das Durchführen einer biometrischen Messung umfasst.

10. Verfahren nach einem der Ansprüche 1 bis 4, wobei der Schritt c. des Bestimmens des digitalen Signals, das dem erhaltenen digitalen Signal (S) am nächsten liegt, unter dem ausgewählten digitalen Signal aus der ersten Anordnung (L) und dem ausgewählten digitalen Signal aus der zweiten Anordnung (R) Folgendes umfasst:
- Berechnen eines ersten Abstands zwischen dem erhaltenen digitalen Signal (S) und dem ausgewählten digitalen Signal aus der ersten Anordnung (L);
- Berechnen eines zweiten Abstands zwischen dem erhaltenen digitalen Signal (S) und dem ausgewählten digitalen Signal aus der zweiten Anordnung (R);
- einen Schritt des Vergleichens des ersten Abstands mit dem zweiten Abstand, um den kleinsten Abstand zu bestimmen,
- wenn der erste Abstand der kleinste Abstand ist, dann liegt das ausgewählte digitale Signal aus der ersten Anordnung (L) näher am erhaltenen digitalen Signal (S), und
- im gegenteiligen Fall liegt das ausgewählte digitale Signal aus der zweiten Anordnung (R) näher am erhaltenen digitalen Signal (S).

11. Verfahren nach dem vorstehenden Anspruch, wobei der erste Abstand zwischen dem erhaltenen digitalen Signal (S) und dem ausgewählten digitalen Signal aus der ersten Anordnung (L) und der zweite Abstand zwischen dem erhaltenen digitalen Signal (S) und dem ausgewählten digitalen Signal aus der zweiten Anordnung (R) euklidische Abstände sind.

12. Verfahren nach einem der vorstehenden Ansprüche, wobei
- jedes digitale Signal aus der ersten Anordnung (L) und der zweiten Anordnung (R) zusätzlich durch seine Position in der Anordnung definiert wird, und
- das ausgewählte digitale Signal in der ersten Anordnung (L) und das ausgewählte digitale Signal in der zweiten Anordnung (R) die gleiche Position in der ersten bzw. der zweiten Anordnung haben.

13. Vorrichtung, die zum Durchführen des Verfahrens nach einem der vorstehenden Ansprüche ausgebildet ist.

## Claims

1. Method for generating data associated with a digital signal of a personal characteristic of an individual, by means of a first set of digital signals (L) and a second set of digital signals (R), the digital signals of the first set (L) and the second set (R) each comprising a digital signal of a personal characteristic of an individual,
the method being executed in an electronic device (DE) comprising a capture device (C) for obtaining a digital signal (S),
the method comprises
- obtaining the digital signal (S) of a personal characteristic of the individual (210, 310) by means of the capture device (C);
- generating a binary vector V[1...n] of length n by means of the following steps:
a. a step of selecting a digital signal from the first set of digital signals (L) (230, 330);
b. a step of selecting a digital signal from the second set of digital signals (R) (235, 335);
c. c. a step of determining the digital signal closest to the digital signal obtained (S) between the digital signal selected from the first set (L) and the digital signal selected from the second set (R) (240, 340)
d. a step of inserting a binary element at 1 in the binary vector V[i] if the digital signal selected from the first set (L) is closer to the digital signal obtained (S) and a binary element at 0 otherwise (S) (250, 255, 350, 355);
- repeating steps a. to d. for a plurality n of digital signals of the first set (L) and for a plurality n of digital signals of the second set (R), the binary element at 1 or 0 being inserted at a corresponding respective i-^{th} position of the binary vector, where i = 1 n;
- delivering the binary vector V as data associated with the digital signal obtained (270, 370).

2. Method according to claim 1, wherein the digital signal obtained (S) and the digital signals of the first set (L) and the second set (R) are generated by extracting the characteristics from a raw digital signal.

3. Method according to any one of the preceding claims, wherein the obtained digital signal (S) and the digital signals of the first set (L) and of the second set (R) each comprise a digital signal of a characteristic of a device.

4. Method according to claim 1 or 2, wherein the obtained digital signal (S) and the digital signals of the first set (L) and of the second set (R) each comprise a digital signal of a biometric characteristic.

5. Method according to the preceding claim, wherein the digital signal of a biometric characteristic represents an image of an individual.

6. Method according to the preceding claim, wherein the image of an individual represents a photographic image of an individual.

7. Method according to claim 4, wherein the digital signal of a biometric characteristic represents a set of points of interest extracted from an image of an individual.

8. Method according to claim 4, wherein the digital signal of a biometric characteristic represents an acoustic image of an individual.

9. Method according to any of claims 1 to 2 or 4 to 8, wherein the step of obtaining the digital signal comprises carrying out a biometric measurement.

10. Method according to any of claims 1 to 4, wherein step c. of determining the digital signal closest to the digital signal obtained (S) between the digital signal selected from the first set (L) and the digital signal selected from the second set (R) comprises:
- computing a first distance between the digital signal obtained (S) and the digital signal selected from the first set (L);
- computing a second distance between the digital signal obtained (S) and the digital signal selected from the second set (R);
- a step of comparing the first distance with the second distance in order to determine the smallest distance,
- if the first distance is the smallest distance then the digital signal selected from the first set (L) is closer to the obtained digital signal (S) and
- otherwise, the digital signal selected from the second set (R) is closer to the obtained digital signal (S).

11. Method according to the preceding claim, wherein the first distance between the digital signal obtained (S) and the digital signal selected from the first set (L) and the second distance between the digital signal obtained (S) and the digital signal selected from the second set (R) are Euclidean distances.

12. Method according to any one of the preceding claims, wherein
- each digital signal of the first set (L) and of the second set (R) is further defined by its position in the set, and
- the digital signal selected in the first set (L) and the digital signal selected in the second set (R) have the same position in the first and second set respectively.

13. Device configured to execute the method according to any of the preceding claims.
